(19) Europäisches Patentamt
European Patent Office
Office européen des brevets

(11) EP 1 587 093 B1

(12) EUROPEAN PATENT SPECIFICATION

(45) Date of publication and mention of the grant of the patent:
**17.06.2009 Bulletin 2009/25**

(51) Int Cl.:
***G11B 7/24*** *(2006.01)*

(21) Application number: **05102631.8**

(22) Date of filing: **04.04.2005**

# (54) Dyes for optical recording medium

Farbstoffe für optische Speichermedien

Colorant pour support d'enregistrement optique

(84) Designated Contracting States:
**DE FR GB**

(30) Priority: **13.04.2004 JP 2004118344**

(43) Date of publication of application:
**19.10.2005 Bulletin 2005/42**

(73) Proprietors:
- **KABUSHIKI KAISHA TOSHIBA**
  **Tokyo (JP)**
- **HAYASHIBARA BIOCHEMICAL LABORATORIES, INC.**
  **Okayama-shi**
  **Okayama-ken (JP)**

(72) Inventors:
- **Morita, Seiji**
  **Toshiba Corporation**
  **Minato-ku**
  **Tokyo, 105-8001 (JP)**
- **Takazawa, Koji**
  **Toshiba Corporation**
  **Minato-ku**
  **Tokyo, 105-8001 (JP)**
- **Morishita, Naoki**
  **Toshiba Corporation**
  **Minato-ku**
  **Tokyo, 105-8001 (JP)**
- **Nakamura, Naomasa**
  **Toshiba Corporation**
  **Minato-ku**
  **Tokyo, 105-8001 (JP)**
- **Aizawa, Yasushi**
  **Hayashibara Biochemical Lab.,Inc.**
  **Okayama-ken (JP)**
- **Koyama, Yoshinori**
  **Hayashibara Biochemical Lab.,Inc**
  **Okayama-ken (JP)**

(74) Representative: **Henkel, Feiler & Hänzel**
**Patentanwälte**
**Maximiliansplatz 21**
**80333 München (DE)**

(56) References cited:
**EP-A- 1 369 861**
**WO-A-02/082438**
**US-A- 5 958 650**
**US-A- 6 071 672**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 587 093 B1

## Description

The present invention relates to a recording material for a medium used for write- once type information recording media which enabled the record and reproduction of information by short wavelength laser beam such as, for example, blue laser beam.

As widely known, the importance of media accumulating digital data has been recently enhanced in accordance with the spread of personal computers and the like. For example, at present, an information recording medium which can digitally record and reproduce long time video information, audio information and the like. Further, information recording media for digital record reproduction are also used to mobile equipments such as a mobile phone.

Hereat, as this kind of information recording media, many disk-shaped media are utilized because they have the large recording capacity of information and random accessible high performance which can rapidly search desired recording information, further are small-sized light weight and superior in preservation property and portability, and are economically low cost, etc.

At present, as disk-shaped information recording media, a so-called optical disk by which information can be recorded and reproduced at noncontact by irradiation of laser beam is mainly used. The optical disk is mainly in accordance with a compact disk (CD) specification or a digital versatile disk (DVD) specification and equipped with interchangeability between both specifications.

In the optical disk, there are three kinds of a playback-only type which cannot record information, such as CD-DA (Digital Audio), CD-ROM (Read Only Memory), DVD-V (Video) and DVD-ROM; a write-once type which can write information once, such as CD-R (Recordable) and DVD-R; and a rewritable type which can re-write information at many times, such as CD-RW (ReWritable) and DVD-RW.

Among these, the write-once type optical disk using an organic coloring matter in a recording layer prevails as recordable media to the utmost because its production cost is low. This is caused by that when the recording capacity of information exceeds 700 MB (Mega Bytes), a use for erasing recording information and re-writing new information is hardly found, and it is enough to be able to practically record information only once.

The write-once type optical disk using an organic coloring matter in a recording layer forms recording marks, utilizing the fact that when a resin substrate is heated above its glass transition point Tg by irradiating laser beam on a recording zone (track) specified by a groove, an organic coloring matter film in the groove is thermally decomposed to generate negative pressure, and as a result the resin substrate is deformed.

As a typical organic coloring matter used for CD-R in which the wavelength of laser beam for record reproduction is about 780 nm, there is a phthalocyanine coloring matter such as IRGAPHOR Ultragreen MX manufactured by Ciba Speciality Chemicals Co. Further, as a typical organic coloring matter used for DVD-R in which the wavelength of laser beam for record reproduction is about 650 nm, there is an azo metal complex coloring matter manufactured by Mitsubishi Kagaku Media Co., Ltd.

By the way, blue laser beam with a wavelength of about 405 nm is used as the laser beam for record reproduction in the next generation optical disk which realizes record reproduction with further high density and high performance, in comparison with the current optical disk. However, an organic coloring matter material which can obtain the performance of record reproduction enough for practical use using such beam with a short wavelength is not developed yet.

Namely, organic coloring matter materials having maximum absorption at a shorter wavelength side than the wavelength (780 nm, 650 nm) of laser beam for record reproduction are used for the current optical disk by which record reproduction is carried out using infrared laser beam or red laser beam. Thereby, the current optical disk realizes so-called H (High) to L (Low) property in which the optical reflection coefficient of recording mark portions which were formed by irradiation of laser beam is lower than an optical reflection coefficient before irradiation of laser beam.

To the contrary, when record reproduction is carried out using blue laser beam, organic coloring matter materials having maximum absorption at a shorter wavelength side than the wavelength (405 nm) of laser beam for record reproduction have problems that they are not only inferior in stability for ultraviolet rays and the like and preservation durability, but also inferior in stability for heat and the contrast and resolution of record marks are bad.

Further, since the ooze of the record marks tends to be large, it influences adjacent tracks and the deterioration of cross light property is easily generated. Further, recording sensitivity is also lowered and there are generated troubles that the adequate SN (Signal to Noise) ratio of playback signals and bit error rate are not obtained.

Further, although the recording sensitivity to a certain degree happens to be obtained under a condition that information is not recorded on adjacent tracks, the cross light to the adjacent tracks is large when information is recorded on the adjacent tracks; therefore the SN ratio of playback signals is lowered, the bit error rate is enhanced and it does not reach at a level suitable for practical use.

An optical recording medium in which the absorption maximum of an organic coloring matter compound contained in a recording layer is a longer wavelength than the wavelength of writing beam is disclosed in Jpn. Pat. Appln. KOKAI Publication No. 2002-74740, and many organic materials are mentioned. However, since there is no disclosure in this publication what property is specifically obtained when what organic material is used, as a result, there is a problem

that those skilled in the art cannot grasp whether the characteristic of an optical disk device utilizing desired blue laser beam and the like can be realized to individuals or not when what organic material is used.

EP-A-1 369 861 discloses an optical recording medium which comprises a substrate and a recording layer provided on the substrate by using a specific organic dye compound having absorption maximum in a region with wavelengths longer than that of a writing light used, and which records information by allowing to irradiate the recording layer with the writing light to act on the dye compound to form a pit on the substrate.

The present invention was achieved considering the above-mentioned circumstances, and the purpose of the invention is to provide a recording material for medium which enables the record reproduction of information having performance with a level in high density which reaches adequately at practical use using short wavelength laser beam such as, for example, blue laser beam.

According to one aspect of the present invention, there is provided a recording material for a medium used for the recording film of a write-once type information recording medium equipped with a transparent resin substrate (20) on which grooves are concentrically or spirally formed and a recording film (24) which was formed on the grooves by one organic coloring matter having an anion portion and a cation portion in which the maximum absorption wavelength zone exists at a longer wavelength side than the wavelength of short wavelength laser beam irradiated on the recording film and forms a record mark on the recording film by irradiation of the short wavelength laser beam, **characterized in that** the cation portion of the organic coloring matter is a monomethine cyanine coloring matter and the anion portion is an azo metal complex and in that the record mark has a higher optical reflection coefficient than the optical reflection coefficient of the recording film before irradiation of the short wavelength laser beam, wherein the organic coloring matter is formed by reaction between a first compound whose cation portion is a monomethine cyanine coloring matter and whose anion portion is not an azo metal complex and a second compound whose anion portion is an azo metal complex and whose cation portion is not a monomethine cyanine coloring matter.

As described above, the present invention specifies a material formed by one organic coloring matter having an anion portion and a cation portion in which the maximum absorption wavelength zone exists at a longer wavelength side than the wavelength of short wavelength laser beam which is irradiated on a recording film, and further, specifies a material having the higher optical reflection coefficient of record marks than the optical reflection coefficient of a recording film before irradiation of the short wavelength laser beam when the record marks were formed on the recording film by irradiation of the short wavelength laser beam, as a recording material for medium.

Thereby, the present invention describes not only an organic material merely as a conventional technique, but also shows a specific organic coloring matter together with its property. Thereby, those skilled in the art can easily determine a recording material for medium utilized for write-once type recording media which utilizes the short wavelength laser beam such as blue laser beam. The evaluation report of specific organic coloring matter materials is specifically illustrated in the specification below corresponding to the evaluation property of recording media.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a chart showing the embodiment of the present invention and shown for illustrating 4 examples of organic coloring matter materials contained in a recording film;
FIG. 2 is a plot chart shown for illustrating the change of absorbance for the wavelength of laser beam with respect to three among the organic coloring matter materials;
FIG. 3 is a plot chart shown for illustrating the change of absorbance for the wavelength of laser beam with respect to the remaining one among the organic coloring matter materials;
FIG. 4 is a chart shown for illustrating a part of preparation method of a disk stamper for preparing a write-once type optical disk in the embodiment;
FIG. 5 is a chart shown for illustrating the residual portion of the preparation method of the disk stamper;
FIG. 6 is a chart shown for illustrating the preparation method of the write-once type optical disk;
FIG. 7 is a chart shown for illustrating a condition for spin-coating an organic coloring matter solution in the preparation method of the write-once type optical disk;
FIG. 8 is a chart shown for illustrating relation between a groove and a land in the write-once type optical disk;
FIG. 9 is a chart shown for illustrating the wobble of a groove track in the write-once type optical disk;
FIG. 10 is a waveform chart showing one example of signals recorded on the write-once type optical disk for carrying out the evaluation test of evaluation of record reproduction; and
FIG. 11 is a chart shown for illustrating the measurement result obtained by carrying out the evaluation test of the write-once type optical disk with respect to the example 11 of the organic coloring matter material.

The embodiment of the present invention is specifically illustrated below referring to the drawings. The write-once type information recording medium in which the recording material for a medium illustrated in the embodiment is used is equipped with a transparent resin substrate which is formed in a disk shape with synthetic resin materials such as polycarbonate. Grooves are concentrically or spirally formed on the transparent resin substrate. The transparent resin substrate can be produced using a stamper by injection molding.

Then, a recording film containing the organic coloring matter is formed on the transparent resin substrate so as to fill the grooves. As the organic coloring matter forming the recording film, an organic coloring matter in which the maximum absorption wavelength zone is shifted to a longer wavelength side than a recording wavelength (405 nm) is used. Further, it is not those in which absorption is extinguished at the recording wavelength zone, but those which were designed so as to have considerable optical absorption.

Thereby, when focusing or tracking is carried out on trucks before recording information with laser beam for recording, they become a low optical reflection coefficient. The optical reflection coefficient of the record mark portion is raised by lowering an optical absorption coefficient caused by the decomposition reaction of the coloring matter by laser beam. Consequently, there is realized a so-called L to H property that the optical reflection coefficient of recording mark portions which were formed by irradiation of laser beam is higher than an optical reflection coefficient before irradiation of laser beam.

Further, deformation happens to be accompanied in the transparent resin substrate, in particular, the bottom portion of grooves by heat generated. In this case, phase difference happens to be also generated in reflected light.

The organic coloring matter is dissolved in a solvent to be liquid and can be easily coated on the plane of the transparent resin substrate by a spin coat method. In this case, a film thickness can be controlled in high precision by controlling a dilution rate by the solvent and the number of rotations at spin coating.

The organic coloring matter consists of a coloring matter portion (cation portion) and a counter ion (anion) portion. As the coloring matter portion, a monomethine cyanine coloring matter is used. In particular, the monomethine cyanine coloring matter is used because the absorption coefficient for a recording wavelength is easily controlled.

Among these, the monomethine cyanine coloring matter having a monomethine chain can be easily adjusted by thinning the recording film coated on the transparent resin substrate such that the maximum absorption and absorbance at a recording wavelength zone (400 nm to 405 nm) is nearby 0.3 to 0.5 and preferably nearby 0.4 and namely, a transmission coefficient is nearby 0.7 to 0.5 and preferably nearby 0.6. Accordingly, the property of record reproduction can be bettered and the optical reflection coefficient and recording sensitivity can be designed favorably.

The organic coloring matter of the present invention consists of an anion portion charged to negative and a cation portion charged to positive. Since the cation portion in the organic coloring matter of the present invention is an atomic group, namely, the coloring matter portion which exhibits substantial absorption ability against the short wavelength laser beam such as blue laser beam, the cation portion is occasionally represented as "coloring matter portion" in the following description.

As the anion portion, an azo metal complex is used from the viewpoint of optical stability. As the azo metal complex, those in which cobalt or nickel is a central metal are superior in optical stability in particular.

An azo metal complex is used. The solubility in case of using 2,2,3,3-tetrafluoro-1-propanol (TFP) as a solvent is better, and a solution for spin coating can be easily prepared. Further, since recycle after the spin coating can be carried out, cost down in production of an optical disk can be planned.

FIG. 1 shows 4 examples of the coloring matters A to D as the organic coloring matter material. The coloring matter A is a coloring matter in which the coloring matter portion (cation portion) is a styryl coloring matter and the anion portion is an azo metal complex 1. The coloring matter C is a coloring matter in which the coloring matter portion (cation portion) is a styryl coloring matter and the anion portion is an azo metal complex 2. The coloring matter D is a coloring matter in which the coloring matter portion (cation portion) is the monomethine cyanine coloring matter and the anion portion is the azo metal complex 1. Further, the single organic metal complex can be used. For example, the coloring matter B is the nickel complex coloring matter.

Only coloring matter D falls within the scope of the present invention.

Further, the coloring matter of the disk substrate on which the organic coloring matter thin film after the spin coat was coated was dried at a temperature of about 80°C by a hot plate or a clean oven, and then, a metal thin film which is the optical reflection film is formed on the thin film by spattering. As the metal reflection film material, for example, Au, Ag, Cu, Al or a composition metal thereof, an alloy and the like are used.

Then, the write-once type optical disk can be prepared as the write-once type information recording medium by spin-coating an ultraviolet curing type resin on a metal film and pasting a disk substrate for protection.

Hereby, the general formula 1 shows the general formula of the styryl coloring matter being the coloring matter portion of the coloring matters A and C, and the general formula 2 shows the general formula of the azo metal complex being the anion portion of the coloring matters A and C. Further, the general formula 3 shows the general formula of the monomethine cyanine coloring matter being the coloring matter portion of the coloring matter D, and the general formula 4 shows the general formula of the azo metal complex being the anion portion of the coloring matter D.

General formula 1:

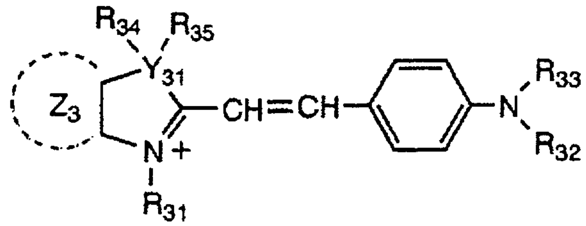

In the general formula 1 of the styryl coloring matter, $Z_3$ represents an aromatic ring and the aromatic ring may optionally have a substituent. $Y_{31}$ represents a carbon atom or a hetero atom. $R_{31}$, $R_{32}$ and $R_{33}$ represent mutually the same or different aliphatic hydrocarbon groups and those aliphatic hydrocarbon groups may optionally have a substituent. $R_{34}$ and $R_{35}$ each independently represent a hydrogen atom or an appropriate substituent and when $Y_{31}$ is a hetero atom, any one or both of $R_{34}$ and $R_{35}$ does/do not exist.

General formula 2:

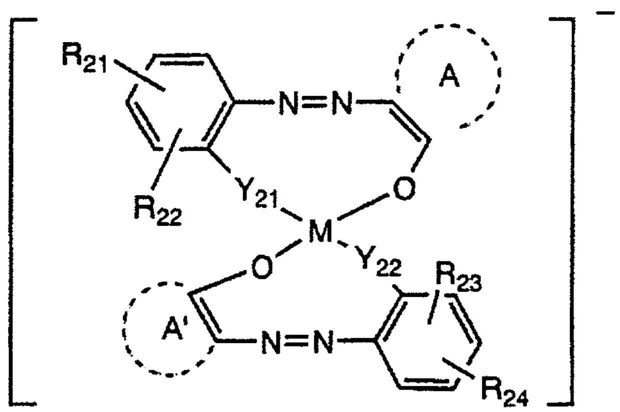

Further, in the general formula 2, A and A' each independently represent the same or different hetero rings comprising one or more hetero atoms selected from a nitrogen atom, an oxygen atom, a sulfur atom, a selenium atom and a tellurium atom. $R_{21}$ to $R_{24}$ each independently represent a hydrogen atom or a substituent. $Y_{21}$ and $Y_{22}$ each independently represent the same or different hetero atoms selected from the elements of the XVI Group in the Periodic Table.

General formula 3:

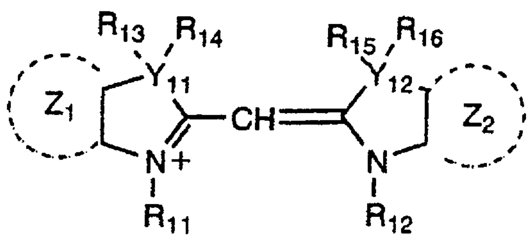

Further, in the general formula 3, $Z_1$ and $Z_2$ each independently represent the same or different aromatic rings with respect to the general formula of the monomethine cyanine coloring matter, and the aromatic ring may optionally have a substituent. $Y_{11}$ and $Y_{12}$ each independently represent a carbon atom or a hetero atom. $R_{11}$ and $R_{12}$ represent an aliphatic hydrocarbon group and those aliphatic hydrocarbon groups may optionally have a substituent. $R_{13}$, $R_{14}$,

$R_{15}$ and $R_{16}$ each independently represent a hydrogen atom or an appropriate substituent and when $Y_{11}$ and $Y_{12}$ are a hetero atom, a part or all of $R_{13}$, $R_{14}$, $R_{15}$ and $R_{16}$ does/do not exist.

General formula 4:

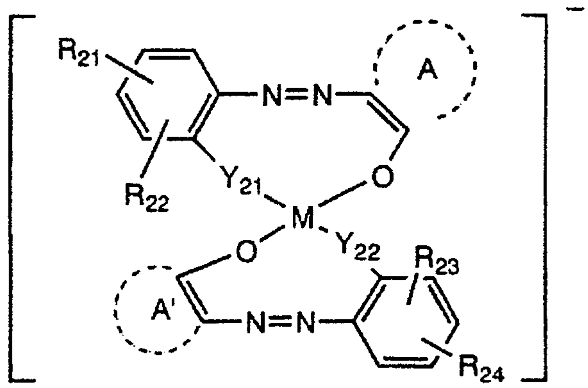

Further, in the general formula 4, A and A' each independently represent the same or different hetero ring group comprising one or more hetero atoms selected from a nitrogen atom, an oxygen atom, a sulfur atom, a selenium atom and a tellurium atom. $R_{21}$ to $R_{24}$ each independently represent a hydrogen atom or a substituent. $Y_{21}$ and $Y_{22}$ each independently represent the same or different hetero atoms selected from the elements of the XVI Group in the Periodic Table.

The monomethine cyanine coloring matter used in the embodiment includes coloring matters obtained by combining ring-shaped nuclei such as an imidazoline ring, an imidazole ring, a benzoimidazole ring, an α-naphthoimidazole ring, a β-naphthoimidazole ring, an indole ring, an isoindole ring, an indolenine ring, an isoindolenine ring, a benzoindolenine ring, a pyridinoindolenine ring, an oxazoline ring, an oxazole ring, an isoxazole ring, a benzoxazole ring, a pyridinooxazole ring, an α-naphthoxazole ring, a β-naphthoxazole ring, a selenazoline ring, a selenazole ring, a benzoselenazole ring, an α-naphthoselenazole ring, a β-naphthoselenazole ring, a thiazoline ring, a thiazole ring, an isothiazole ring, a benzothiazole ring, an α-naphthothiazole ring, a β-naphthothiazole ring, a tellurazoline ring, a tellurazole ring, a benzotellurazole ring, an α-naphthotellurazole ring, a β-naphthotellurazole ring, further, an acridine ring, an anthracene ring, an isoquinoline ring, an isopyrrole ring, an imidanoxaline ring, an indanedione ring, an indazole ring, an indaline ring, an oxadiazole ring, a carbazole ring, a xanthene ring, a quinazoline ring, a quinoxaline ring, a quinoline ring, a chroman ring, a cyclohexanedione ring, a cyclopentanedione ring, a cinnoline ring, a thiadiazole ring, a thiooxazolidone ring, a thiophene ring, a thionaphthene ring, a thiobarbituric acid ring, a thiohydantoin ring, a tetrazole ring, a triazine ring, a naphthalene ring, a naphthyridine ring, a piperazine ring, a pyrazine ring, a pyrazole ring, a pyrazoline ring, a pyrazolidine ring, a pyrazolone ring, a pyran ring, a pyridine ring, a pyridazine ring, a pyrimidine ring, a pyrylium ring, a pyrrolidine ring, a pyrroline ring, a pyrrole ring, a phenazine ring, a phenanthridine ring, a phenanthrene ring, a phenanthroline ring, a phthalazine ring, a pteridine ring, a furazane ring, a furan ring, a purine ring, a benzene ring, a benzoxazine ring, a benzopyran ring, a morpholine ring and a rhodanine ring which are mutually the same or different and may optionally have one or more substituents at both ends of monomethine chain which may optionally have one or more substituents.

Further, in the general formulae of the monomethine cyanine coloring matter and styryl coloring matter, $Z_1$ to $Z_3$ represent aromatic rings such as a benzene ring, a naphthalene ring, a pyridine ring, a quinoline ring and a quinoxaline ring, and those aromatic rings may optionally have one or more substituents. Example of the substituent includes aliphatic hydrocarbon groups such as a methyl group, a trifluoromethyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a 1-methylpentyl group, a 2-methylpentyl group, a hexyl group, an isohexyl group, a 5-methylhexyl group, a heptyl group and an octyl group; alicyclic hydrocarbon groups such as a cyclopropyl group, a cyclobutyl group, a cyclopentyl group and a cyclohexyl group; aromatic hydrocarbon groups such as a phenyl group, a biphenyl group, an o-tolyl group, a m-tolyl group, a p-tolyl group, a xylyl group, a mesityl group, an o-cumenyl group, a m-cumenyl group and a p-cumenyl group; ether groups such as a methoxy group, a trifluoromethoxy group, an ethoxy group, a propoxy group, an isopropoxy group, a butoxy group, a sec-butoxy group, a tert-butoxy group, a pentyloxy group, a phenoxy group and a benzoyloxy group; ester groups such as a methoxycarbonyl group, a trifluoromethoxycarbonyl group, an ethoxycarbonyl group, a propoxycarbonyl group, an acetoxy group and a benzoyloxy group; halogen

groups such as a fluoro group, a chloro group, a bromo group and an iodo group; thio groups such as a methylthio group, an ethylthio group, a propylthio group, a butylthio group and a phenylthio group; sulfamoyl groups such as a methylsulfamoyl group, a dimethylsulfamoyl group, an ethylsulfamoyl group, a diethylsulfamoyl group, a propylsulfamoyl group, a dipropylsulfamoyl group, a butylsulfamoyl group and a dibutylsulfamoyl group; amino groups such as a primary amino group, a methylamino group, a dimethylamino group, an ethylamino group, a diethylamino group, a propylamino group, a dipropylamino group, an isopropylamino group, a diisopropylamino group, a butylamino group, a dibutylamino group and a piperidino group; carbamoyl groups such as a methylcarbamoyl group, a dimethylcarbamoyl group, an ethylcarbamoyl group, a diethylcarbamoyl group, a propylcarbamoyl group and a dipropylcarbamoyl group; further, a hydroxy group, a carboxyl group, a cyano group, a nitro group, a sulfino group, a sulfo group, a mesyl group and the like. Further, in the general formula 3, $Z_1$ and $Z_2$ may be mutually the same or different.

$Y_{11}$, $Y_{12}$ and $Y_{31}$ in the general formulae of the monomethine cyanine coloring matter and styryl coloring matter represent a carbon atom or a hetero atom. Example of the hetero atom includes atoms of the XV and XVI Groups in the Periodic Table such as a nitrogen atom, an oxygen atom, a sulfur atom, a selenium atom and a tellurium atom. Further, a carbon atom in $Y_{11}$, $Y_{12}$ and $Y_{31}$ may be atom groups in which two carbon atoms such as, for example, an ethylene group and a vinylene group are main. Further, $Y_{11}$ and $Y_{12}$ in the general formula of the monomethine cyanine coloring matter may be mutually the same or different.

$R_{11}$, $R_{12}$, $R_{13}$, $R_{32}$ and $R_{33}$ in the general formulae of the monomethine cyanine coloring matter and styryl coloring matter represent an aliphatic hydrocarbon group. Example of the aliphatic hydrocarbon group includes a methyl group, an ethyl group, a propyl group, an isopropyl group, an isopropenyl group, a 1-propenyl group, a 2-propenyl group, a butyl group, an isobutyl group, a sec-butyl group, a tert-butyl group, a 2-butenyl group, a 1,3-butadienyl group, a pentyl group, an isopentyl group, a neopentyl group, a tert-pentyl group, a 1-methylpentyl group, a 2-methylpentyl group, a 2-pentenyl group, a hexyl group, an isohexyl group, a 5-methylhexyl group, a heptyl group and an octyl group. The aliphatic hydrocarbon group may optionally have one or more substituents in like manner as those in $Z_1$ to $Z_3$.

Further, $R_{11}$ and $R_{12}$ in the general formula of the monomethine cyanine coloring matter and $R_{13}$, $R_{32}$ and $R_{33}$ in the general formula of the styryl coloring matter may be mutually the same or different.

Each of $R_{13}$ to $R_{16}$, $R_{34}$ and $R_{35}$ in the general formulae of the monomethine cyanine coloring matter and styryl coloring matter represents independently a hydrogen atom or an appropriate substituent. Example of the substituent includes aliphatic hydrocarbon groups such as a methyl group, a trifluoromethyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a l-methylpentyl group, a 2-methylpentyl group, a hexyl group, an isohexyl group, a 5-methylhexyl group, a heptyl group and an octyl group; ether groups such as a methoxy group, a trifluoromethoxy group, an ethoxy group, a propoxy group, a butoxy group, a tert-butoxy group, a pentyloxy group, a phenoxy group and a benzoyloxy group; halogen groups such as a fluoro group, a chloro group, a bromo group and an iodo group; further, a hydroxy group, a carboxyl group, a cyano group, a nitro group and the like. Further, when $Y_{11}$, $Y_{12}$ and $Y_{31}$ in the general formulae of the monomethine cyanine coloring matter and styryl coloring matter are a hetero atom, a part or all of $R_{13}$ to $R_{16}$ in $Z_1$ and $Z_2$, or any one or both of $R_{34}$ and $R_{35}$ in $Z_3$ does/do not exist.

Further, in the general formula of the azo metal complex, A and A' represent 5-membered to 10-membered hetero ring groups such as, for example, a furyl group, a thienyl group, a pyrolyl group, a pyridyl group, a piperidino group, a piperidyl group, a quinolyl group and an isooxazolyl group, which are mutually the same or different hetero rings comprising one or more hetero atoms selected from a nitrogen atom, an oxygen atom, a sulfur atom, a selenium atom and a tellurium atom. The hetero ring groups may have one or more substituents such as, for example, aliphatic hydrocarbon groups such as a methyl group, a trifluoromethyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a 1-methylpentyl group, a 2-methylpentyl group, a hexyl group, an isohexyl group and a 5-methylhexyl group; ester groups such as a methoxycarbonyl group, a trifluoromethoxycarbonyl group, an ethoxycarbonyl group, a propoxycarbonyl group, an acetoxy group, a trifluoroacetoxy group, and a benzoyloxy group; aromatic hydrocarbon groups such as a phenyl group, a biphenyl group, an o-tolyl group, a m-tolyl group, a p-tolyl group, an o-cumenyl group, a m-cumenyl group, a p-cumenyl group, a xylyl group, a mesityl group, a styryl group, a cinnamoyl group and a naphthyl group; further, a carboxyl group, a hydroxy group, a cyano group, a nitro group and the like.

The specific example of the styryl coloring matter includes, for example, those represented by the chemical formula 1 or 2. Either of these styryl coloring matters can be obtained by methods described in, for example, Jpn. Pat. Appln. KOKAI Publication No. 2002-206061 (Title of the Invention: "styryl coloring matter"), Re-published Patent WO No. 01-40382 (Title of the Invention: "styryl coloring matter"), or in accordance with those methods.

Chemical formula 1:

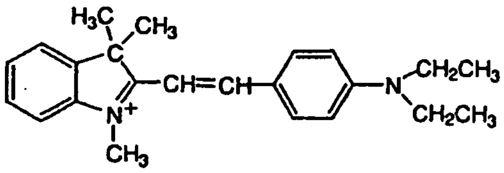

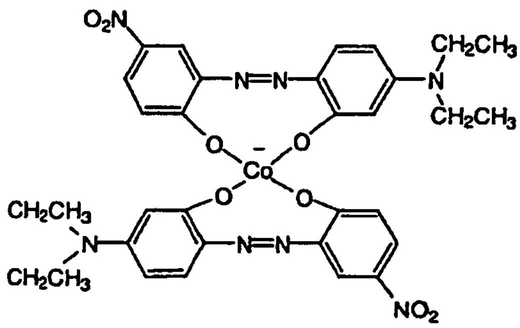

Chemical formula 2:

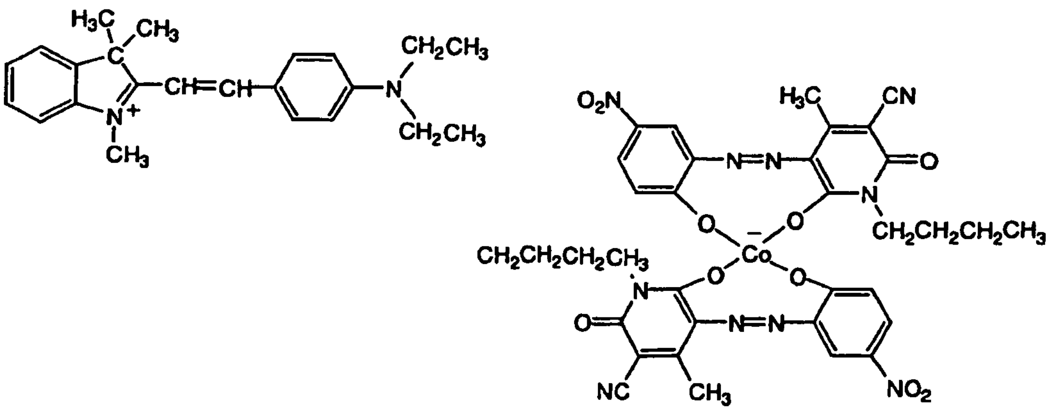

The specific example of the formazan metal complex includes, for example, those represented by the chemical formula 3. The formazan metal complex can be obtained by methods described in, for example, Re-published Patent WO No. 00-075111 (Title of the Invention: "formazan metal complex") and the like, or in accordance with the method.

Chemical formula 3:

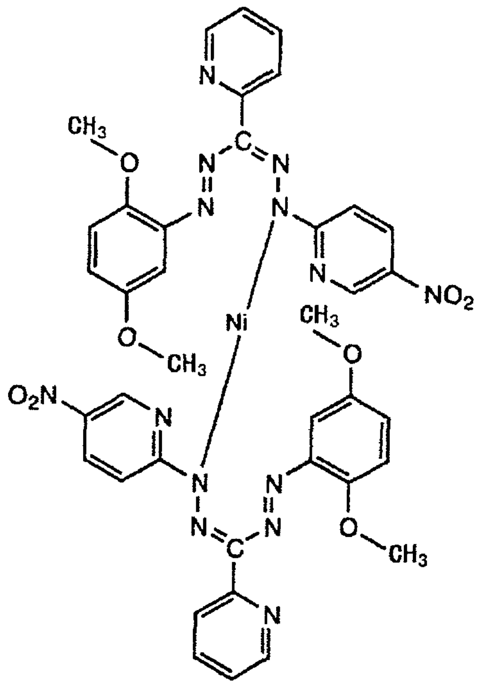

The specific example of the cyanine coloring matter according to the present invention includes, for example, those represented by the chemical formulae 4 to 11.

Chemical formula 4:

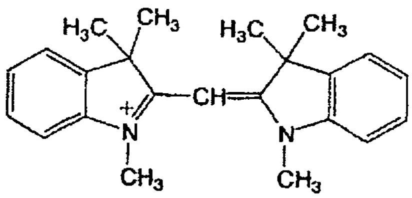

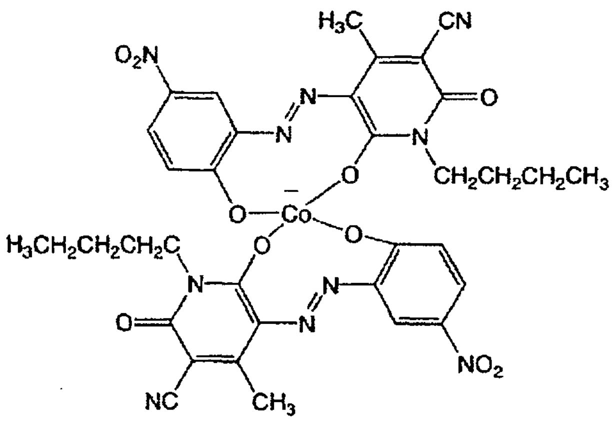

Chemical formula 5:

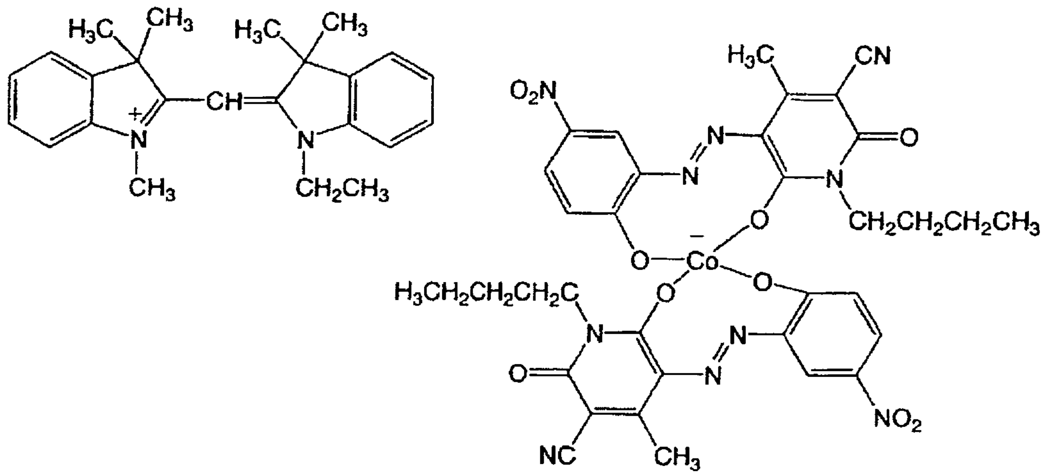

Chemical formula 6:

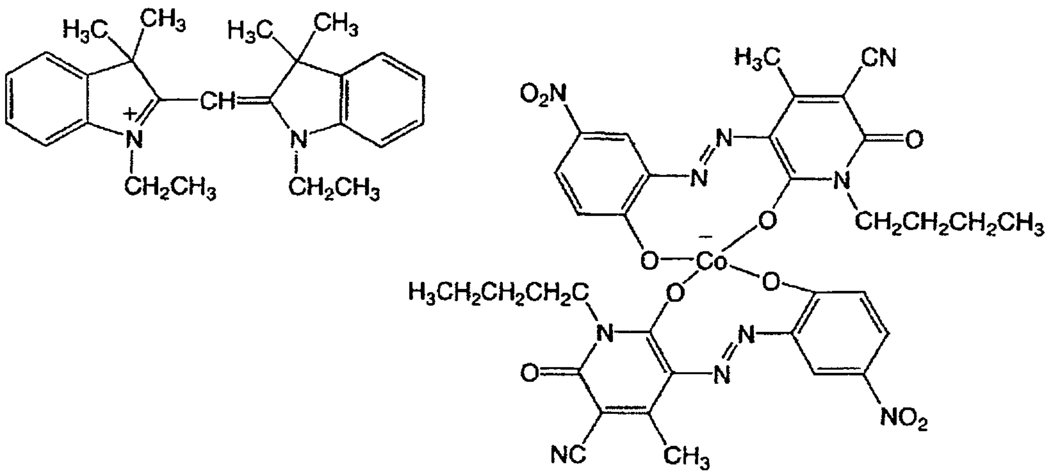

Chemical formula 7:

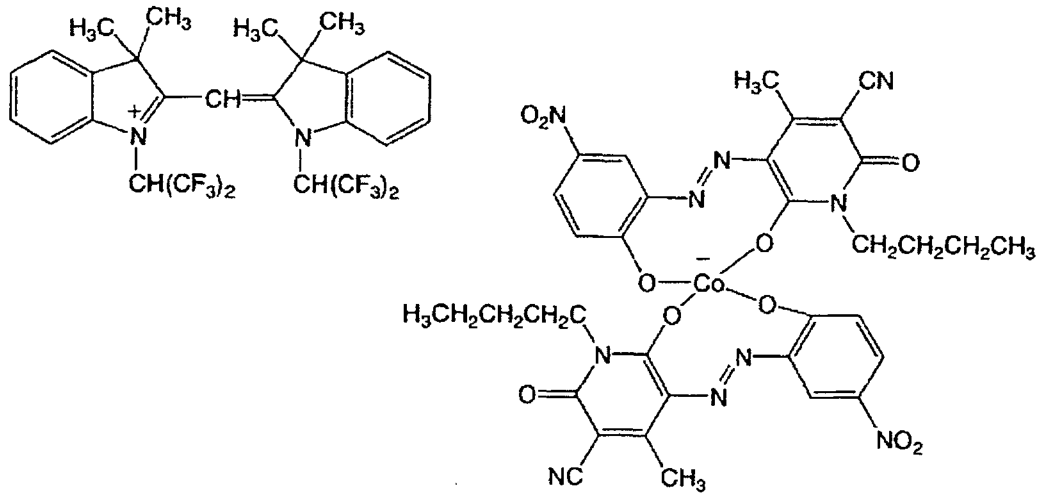

Chemical formula 8:

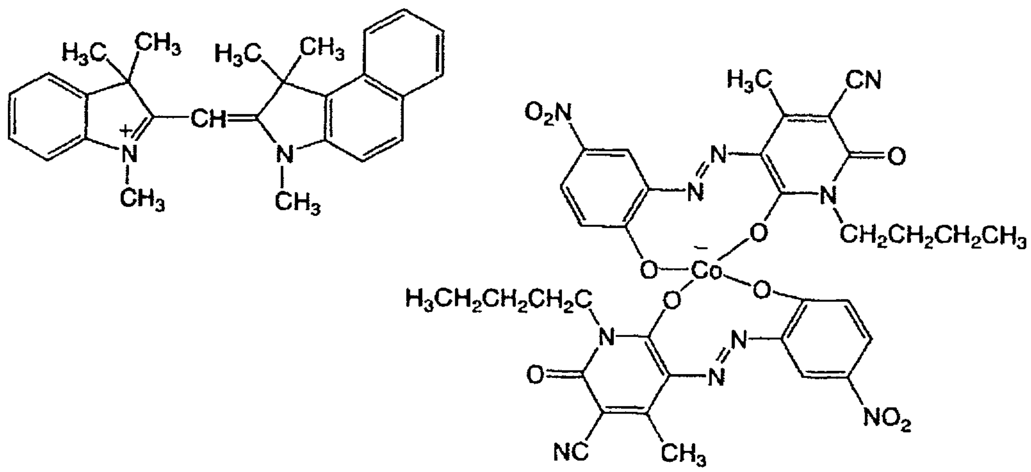

Chemical formula 9:

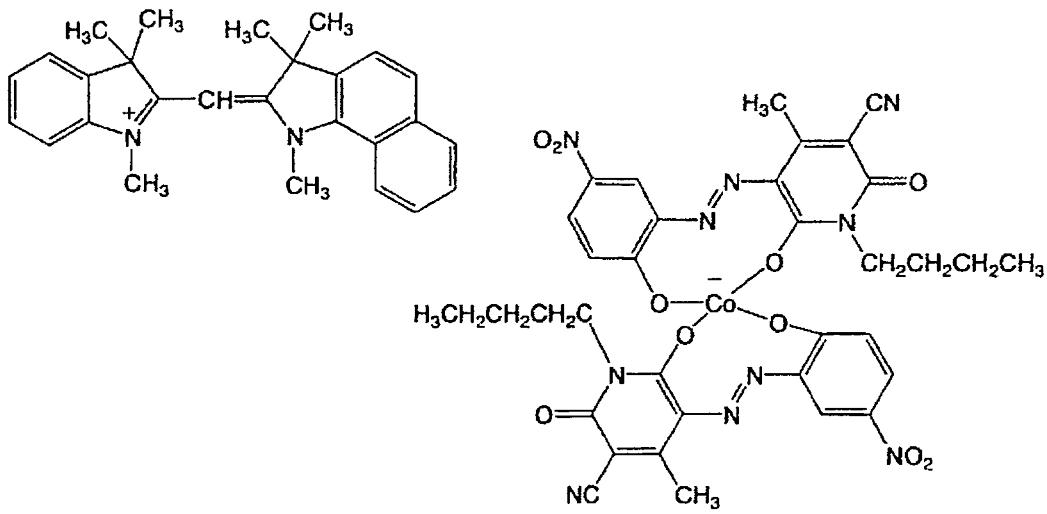

Chemical formula 10:

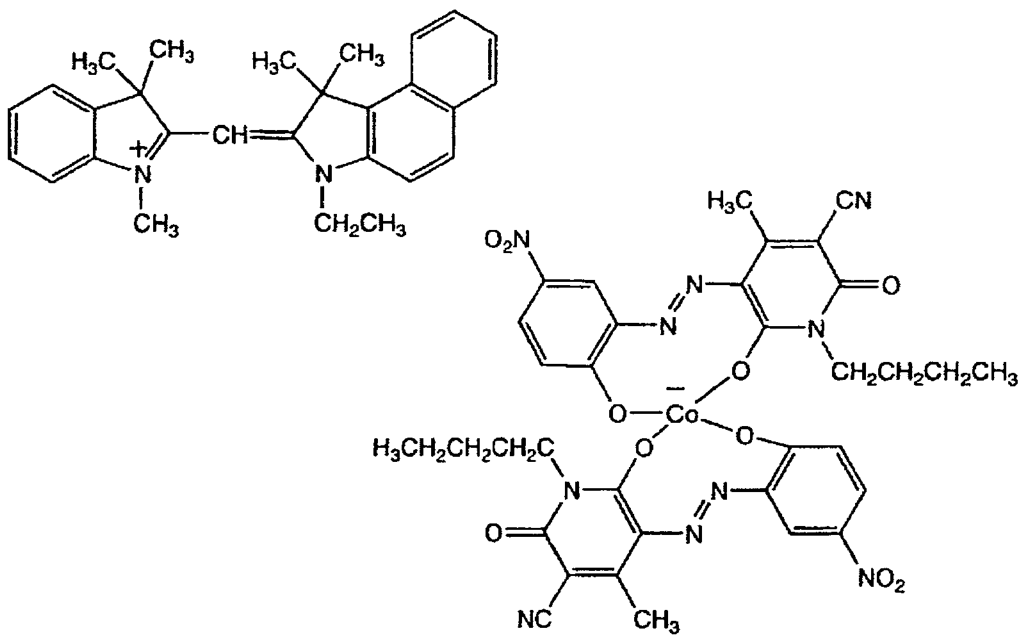

Chemical formula 11:

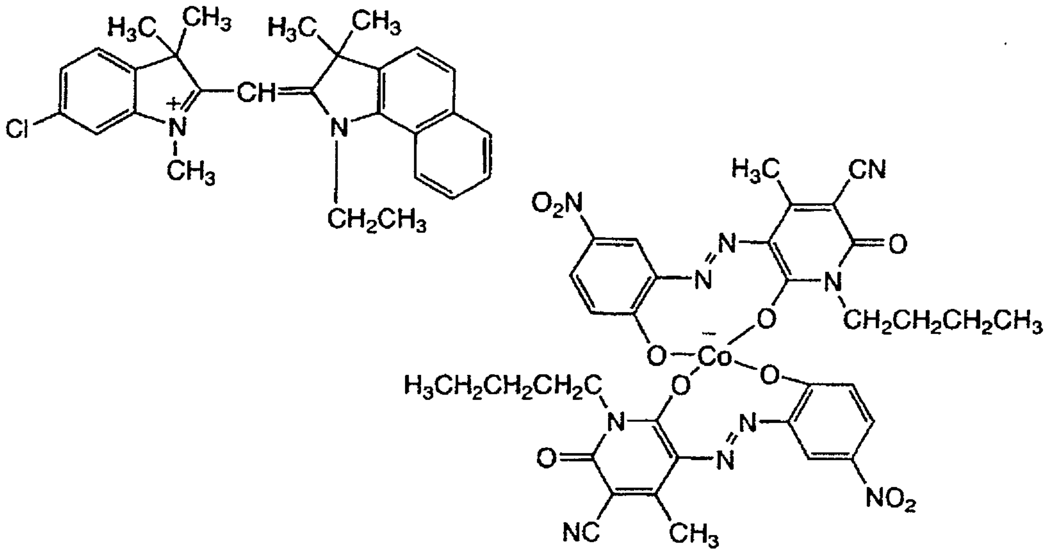

The monomethine cyanine coloring matter according to the present invention can be obtained at high yield by reacting a compound represented by the general formula 5 which has $Z_1$, $Z_2$, $R_{11}$ and $R_{12}$ corresponding to the general formula 3, with a compound represented by the general formula 6 which has $R_{21}$ to $R_{24}$ corresponding to the general formula 4. Further, $X_1$ in the general formula 5 represents appropriate anions such as, for example, inorganic acid ions such as fluoride ion, chloride ion, bromide ion, iodide ion, fluorate ion, chlorate ion, bromate ion, iodate ion, perchlorate ion, phosphate ion, hexafluoro phosphate ion, hexafluoro antimate ion, hexafluoro stannate ion, fluoroborate ion and tetrafluoroboate ion; organic acid ions such as thiocyanate ion, benzenesulfonate ion, naphthalenesulfonate ion, naphthalenedisulfonate ion, benzenecarboxylate ion, alkylcarboxylate ion, trihaloalkylcarboxylate ion, alkylsulfate ion, trihaloalkylsulfate ion, nicotinate ion and tetracyanoquinodimethane ion. Further, $X_2$ in the general formula 6 represents appropriate cations such as onium ions such as, for example, alkylammonium ion, pyridinium ion and quinolinium ion.

General formula 5:

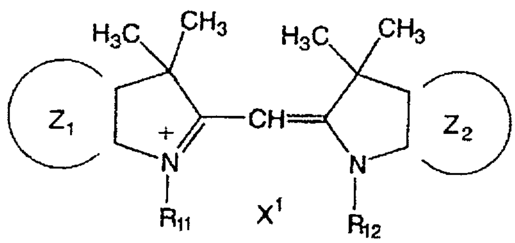

General formula 6:

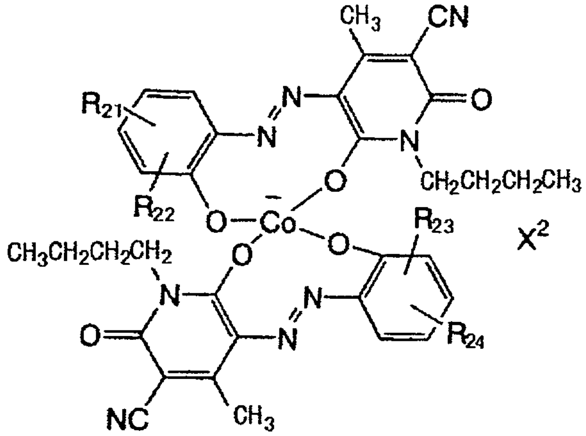

When it is synthesized, appropriate amounts of the compounds represented by the general formulae 5 and 6 are respectively charged in a reaction container, appropriately dissolved in a solvent if necessary, and reacted at a peripheral temperature or a temperature higher than the peripheral temperature while being heated and stirred by heating and refluxing.

Example of the solvent includes hydrocarbons such as pentane, hexane, cyclohexane, petroleum ether, octane, petroleum benzine, isooctane, benzene, toluene and xylene; halogenated compounds such as carbon tetrachloride, chloroform, 1,2-dichloroethane, 1,2-dibromoethane, trichloroethylene, tetrachloroethylene, chlorobenzene, bromobenzene and $\alpha$-dichlorobenzene; alcohols and phenols such as methanol, ethanol, 2,2,2-trifluoroethanol, 1-propanol, 2-propanol, 1-butanol, 2-butanol, isobutyl alcohol, isopentyl alcohol, cyclohexanol, ethylenegiycol, propyleneglycol, 2-methoxyethanol, 3-ethoxyethanol, phenol, benzyl alcohol, cresol, diethyleneglycol, triethyleneglycol and glycerin; ethers such as diethyl ether, diisoprapyl ether, tetrahydrofuran, tetrahydropyran, 1,4-dioxane, anisole, 1,2-dimethoxyethane, diethyleneglycol dimethyl ether, dicyclohexyl-18-crown-6, methylcarbitol and ethylcarbitol; acids and acid derivatives such as acetic acid, acetic anhydride, trichloroacetic acid, trifluoroacetic acid, ethyl acetate, butyl acetate, ethylene carbonate, propylene carbonate, formamide, N-methylformamide, N,N-dimethylformamide, N-methylacetamide, N,N-dimethylacetamide, hexamethyl phosphoric acid triacetamide and triethyl phosphate; nitriles such as acetonitrile, propionitrile, succinonitrile and benzonitrile; nitro compounds such as nitromethane and nitrobenzene; sulfur-containing compounds such as dimethyl sulfoxide and sulfolane; water and the like, and these are used in combination, if necessary.

When a solvent is used, the efficiency of reaction is usually lowered when the amount of a solvent is much, and to the contrary, when it is little, it becomes difficult to uniformly heat and stir and a side reaction tends to occur. Accordingly, it is desirable that the amount of a solvent is until 100-fold and usually 5-fold to 50-fold pound for pound. The reaction is finished within 10 hours and usually within 5 hours depending on the kind of compounds which is raw materials and its reaction condition. The proceeding of the reaction can be monitored by generally used methods such as thin layer chromatography, gas chromatography and high performance liquid chromatography. The desired amount of the cyanine coloring matter according to the present invention can be obtained by the method or in accordance with the method. Further, the compounds represented by the general formulae 5 and 6 can be obtained, for example, according to the method which was described in "Photosensitive Coloring matter" published by Sangyo Tosho Co., on October 17, 1997, under the editorship of Masaaki Hayami, pages 24 to 30 and the like. When there are commercially available coloring matters, they may be used by purification, if necessary.

Further, the azo compounds composing the azo-base organic metal complex which is represented by the general formula can be obtained according to a usual method by reacting a diazonium salt having $R_{21}$ and $R_{22}$, or $R_{23}$ and $R_{24}$ corresponding to the general formula, with a hetero ring compound such as, for example, an isoxazolone compound, an oxazolone compound, a thionaphthene compound, a pyrazolone compound, a barbituric acid compound, a hydantoin compound or a rhodanine compound which has an active methylene group adjacent to a carbonyl group in a molecule. $Y_{21}$ and $Y_{22}$ each independently represent the same or different hetero atoms selected from the elements of the XVI Group in the Periodic Table such as an oxygen atom, a sulfur atom, a selenium atom and a tellurium atom.

The azo metal complex represented by the general formula is usually used in the mode of a metal complex in which one or more of them is coordinated with a metal (a central atom). Example of the metal element being a central atom includes scandium, yttrium, titanium, zirconium, hafnium, vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, zinc, cadmium, mercury and the like, and cobalt is preferable in particular.

Hereat, absorbance is a value which is measured by injecting laser beam on the surface of an optical disk substrate which was reproduced by molding in like manner as Example described later, in a condition in which the coloring matter solution was coated, namely in a condition in which only a coloring matter thin layer exists on the surface of an disk substrate, from the substrate side and monitoring the intensity of laser beam transmitted from the coloring matter surface side. The absorbance A is represented by A = $-\log_{10}(I/I_0)$ when the intensity of incident laser beam is referred to as $I_0$ and the intensity of laser beam transmitted is referred to as I. The thickness of the coloring matter layer was about 90 nm to 120 nm at measuring the values of FIGS. 2 and 3 and the like. The conditions of the concentration of the coloring matter solution and spin coating are the same condition as that in Example described later. Further, not the absorbance but transmission coefficient may be used as an index of coloring matter comparison. For example, the transmission coefficient B can be calculated by B = 1 - A for short wavelength laser beam such as blue laser beam.

A portion (a) of FIG. 2 shows the change of absorbance for the wavelength of laser beam irradiated in the coloring matter A. A portion (b) of FIG. 2 shows the change of absorbance for the wavelength of laser beam irradiated in the coloring matter B. A portion (c) of FIG. 2 shows the change of absorbance for the wavelength of laser beam irradiated in the coloring matter C.

Further, a portion (a) of FIG. 3 shows the change of absorbance for the wavelength of laser beam irradiated in the coloring matter D. A portion (b) of FIG. 3 shows the change of absorbance for the wavelength of laser beam irradiated in the anion portion of the coloring matter D.

As cleared from properties shown in FIGS. 2 and 3, the maximum absorption wavelength zone is shifted to a longer wavelength side than the recording wavelength (405 nm), in the respective coloring matters A to D. The write-once type optical disk illustrated in the embodiment can carry out the record reproduction of information with a level which is superior in preservation durability, SN ratio of playback signals, bit error rate and the like and reaches adequately at practical use in high density by setting the composition that the organic coloring matter having the above-mentioned properties is contained in the recording film and there is realized a so-called L to H property that the optical reflection coefficient after irradiation of laser beam is higher than an optical reflection coefficient before irradiation of laser beam, even if short wavelength laser beam such as blue laser beam is used.

Namely, since the maximum absorption wavelength of the recording film containing the organic coloring matter is a longer wavelength side than that of laser beam for recording, the write-once type optical disk can suppress the absorption of short wavelength light such as ultraviolet rays to a little level; therefore it is superior in optical stability and the reliability of the record reproduction of information is enhanced.

Further, since the optical reflection coefficient is low at the recording of information, cross light by reflection scattering is not generated; therefore the deterioration of the SN ratio of playback signals and bit error rate can be lessened even in a condition in which information is recorded in adjacent tracks. Further, the contrast of recorded marks and resolution can be also kept in high quality for heat and the design of recording sensitivity can be easily carried out.

Further, it is desirable for obtaining good L to H property that the absorbance at a recording wavelength (405 nm) is 0.3 or more and namely, the transmission coefficient is 0.7 or less. Further preferably, the absorbance is 0.4 or more and the transmission coefficient is 0.6 or less.

Hereat, the form of the groove being the tracks of record reproduction of the write-once type optical disk affects the property of record reproduction. The inventors of the invention have intensively studied it and as a result, have found that relation between the width of the groove and the width of its land is important in particular.

Namely, it was cleared that when the width of the groove is equal with the width of its land or is narrower than the width of its land, the SN ratio of playback signals of recorded information and bit error rate tend to be deteriorated. Namely, it was cleared that when the width of the groove is wide than the width of its land, good record reproduction property can be obtained.

Further, it is generally necessary for recording information on a writable optical disk that various address information such as a track number, a sector number, a segment number and a ECC (Error Checking and Correcting) block address number is preliminarily recorded in the optical disk.

The means for recording the address information can be realized by wobbling the groove to the diameter direction of an optical disk. Namely, the recording of address information by wobbling can be realized by a means of modulating the frequency of wobbling in accordance with the address information, a means of modulating the amplitude of wobbling in accordance with the address information, a means of modulating the phase of wobbling in accordance with the address information, a means of modulating the interval of reversing the polarity of wobbling in accordance with the address information, and the like. Further, a means of using not only the wobbling groove but also the change of a land height in combination, namely a means of embedding pre pits in the land can be also used.

Further, it has been also found that the amplitude of wobbling of grooves, the depth of grooves and the like affect also the property of record reproduction greatly.

Although the organic coloring matter according to the present invention has remarkable light resistance against environmental light such as natural light and artificial light, it does not exclude the mode of using one or more so-called

light resistance improvers (quencher), if necessary, in order to suppress the color degradation, deterioration, modification, degeneration, decomposition and the like which are caused by singlet oxygen which is optionally generated in accordance with irradiation of laser beam and the like. The light resistance improver which is used in combination with the organic coloring matter according to the present invention includes metal complexes such as an amine compound, a carotene compound, a sulfide compound, a phenol compound, transition metal chelates such as acetylacetonate chelate-base, salicylaldehyde oxime-base, diimmonium-base, dithiol-base, thiocatheconal chelate-base, thiobisphenolate chelate-base, bisdithio-α-diketone chelate-base and formazan-base, which are described in, for example, Re-published Patent WO No. 00/075111; "Coloring Material Technology Hand Book" First edition, edited by Corporation Aggregate: Coloring Material Associate, pages 1274 to 1282, published by Asakura Shoten Co., published on November 25, 1989; Masahiro Shinkai et al, "Coloring matters and Chemicals" Vol. 37, No. 7, pages 185 to 197 (1992) and the like. They are used in combination, if necessary. Among these, the formazan-base and dithiol-base metal complexes are preferable in particular, from the viewpoint of remarkably improving the light resistance of the organic coloring matter according to the present invention and from the viewpoint of realizing a good amorphous solid in a mix condition with the organic coloring matter according to the present invention. Although depending on uses, the amount of the light resistance improver used in combination is usually adjusted 1% or more by mass with respect to the organic coloring matter within a range of 3 to 30% by mass preferably. When the light resistance improver is used in combination, the organic coloring matter of the present invention is uniformly mixed with the light resistance improver preliminarily to be applied on a substrate in the mode of a liquid composition, or the organic coloring matter and the light resistance improver are respectively liquefied and applied to a substrate while adjusting the amounts so that the compounding proportion of both on the substrate is within a fixed range.

EXAMPLES

The embodiment described above is illustrated below based on Example. Firstly, a disk stamper for a high density R disk is prepared according to procedures below. Namely, as shown in a portion (a) of FIG. 4, a silicon wafer 11 for semiconductor production which was formed in a disk shape at a diameter of 200 mm and a thickness of 0.725 mm is prepared.

The silicon wafer 11 is immersed in a mix solution (the temperature of solution: 100°C) of hot concentrated sulfuric acid and aqueous hydrogen peroxide for 5 minutes. Then, the silicon wafer 11 was rinsed by being immersed in ultra pure water, rinsed with ultra sonic, immersed in a warm ultra pure water vessel at 70°C, and dried by being gradually pulled up.

Then, as shown in a portion (b) of FIG. 4, an electron beam resist film 12 is formed on the surface of the silicon wafer 11. The electron beam resist film 12 is formed on the surface of the silicon wafer 11 by spin-coating a resist solution which was prepared by mixing 86.2% by weight of an electron beam resist (ZEP520A7 manufactured by Nippon Zeon Co., Ltd.) per 100% by weight of anisole solvent (ZEP-A manufactured by Nippon Zeon Co., Ltd.).

Further, the spin-coating condition is that the silicon wafer 11 is chucked under vacuum on a spin table, the resist solution 12 is dropped on the central portion of the silicon wafer 11 through a 0.1 μm filter during the stop of rotation of the spin table, and then the spin table is rotated at 2500 rpm.

Then, as shown in a portion (c) of FIG. 4, grooves 13 are formed in the electron beam resist film 12. This is realized by charging the silicon wafer 11 on which the electron beam resist film 12 was coated, in the vacuum vessel of an electron beam cutting machine, exhausting it to a level of $10^{-5}$Pa, then rotating the silicon wafer 11, irradiating electron beam on the electron beam resist film 12 from an electron gun 14, and recording a concentric or spiral groove pattern by electron beam.

As the recording condition of the groove pattern, electron beam acceleration voltage is 50 kV, beam current is 120 nA, a beam diameter is 110 nm and recording line speed is 1.1m/sec. Further, the recording zone of the grooves 13 is 23 mm to 59 mm at a radius of the silicon wafer 11.

Further, the silicon wafer 11 on which the grooves 13 were recorded is taken out from the vacuum vessel of an electron beam cutting machine, and the resist pattern of the grooves 13 is formed by immersing it in an organic developing liquid 16 in an immersing vessel 15 to carry out dipping development, as shown in a portion (d) of FIG. 4.

Then, as shown in a portion (e) of FIG. 4, a Ni thin film 17 is formed on the surface of the resist pattern by carrying out the DC spattering of a Ni film and electrically conducted.

Then, as shown in a portion (a) of FIG. 5, Ni plating is carried out on the Ni thin film 17 to form a Ni plating layer 18 with a thickness of 247 μm. Then, as shown in a portion (b) of FIG. 5, the Ni plating layer 18 is peeled and rinsed by spinning and then, the residual resist on the surface is peeled by oxygen RIE. Then, as shown in a portion (c) of FIG. 5, a protective film is coated on the Ni plating layer 18, its rear face side is polished and the inner diameter and outer diameter are processed to prepare a disk stamper 19.

Then, the write-once type optical disks are prepared using the disk stamper 19. Namely, as shown in a (b) of FIG. 6, a transparent disk substrates 20 with a thickness of 0.6 mm made of polycarbonate are reproduced by injection

molding with an injection molding machine SD40 manufactured by Sumitomo Heavy Industries Ltd. using the disk stamper 19 as shown in a portion (a) of FIG. 6. Grooves 21 are naturally formed on the disc substrates 20.

Then, as shown in a portion (c) of FIG. 6, an organic coloring matter solution 23 described later which was prepared by dissolving an organic coloring matter in a solvent is dropped on a face where the grooves 21 of the disc substrate 20 are formed using a dispenser 22 which has nozzle diameter of 21 G. Then, as shown in a portion (d) of FIG. 6, the organic coloring matter solution 23 fills the grooves 21 to form a recording film 24 by rotating the disc substrate 20 to be controlled.

The spin-coating condition of the recording film 24 is that the disc substrate 20 is firstly driven by rotation from a stop condition to 300 rpm for one second, and the organic coloring matter solution 23 is coated by a dispenser 22 during retaining the condition for 8 seconds. The number of rotations of the disc substrate 20 is enhanced to 1800 rpm for 2 seconds and retained for 15 seconds under the condition. Then, the number of rotations of the disc substrate 20 is enhanced to 3000 rpm for 2 seconds and retained for 3 seconds under the condition.

The film thickness of the recording film 24 can be controlled by controlling the number of rotations at the second stage. Namely, the film thickness of the recording film 24 can be thickened by lowering the number of rotations at the second stage.

Then, the disc substrate 20 on which the recording film 24 was coated is baked at 80°C for 30 minutes in a clean oven, and a metal film 25 of 100 nm is sputtered on the recording film 24 as shown in FIG. 6E. As the metal film 25, Ag containing 0.7% of Nd and 0.9% of Cu and an Ag alloy containing 1% of Nd and 1% of Cu are used but pure silver can be also used.

Then, as shown in a portion (f) of FIG. 6, an ultraviolet curable resin 26 is spin-coated on the metal film 25, and the write-once type optical disk (R disk) 28 containing the organic coloring matter in the recording film 24 is prepared by pasting a disc substrate 27 with a thickness of 0.6 mm made of a polycarbonate.

Hereat, as shown in FIG. 8, for the write-once type optical disk 28 prepared as the above-description, laser beam for record and reproduction by an optical head 29 is injected from a face which is the reverse side of the face on which the recording film 24 of the disc substrate 20 is coated.

In this case, the bottom faces 21a of the grooves 21 which were formed on the disc substrate 20 and the lands 30 which are sandwiched by the adjacent grooves 21 become the recording tracks of information. Further, the recording tracks which the bottom faces 21a of the grooves 21 compose are called as a groove track Gt and the recording tracks which the lands 30 compose are called as a land track Lt.

The difference of the height of the face of the groove track Gt against the face of the land track Lt is referred to as a groove depth Gh. Further, the width of the groove track Gt estimated at about the half height of the groove depth Gh is called as a groove width Gw, and the width of the land track Lt estimated at about the half height of the groove depth Gh is called as a land width Lw.

Further, as described above, the groove tracks Gt are wobbled for recording various address information. A portion (a) of FIG. 9 shows a case that the adjacent groove tracks Gt are the same phase and a portion (b) of FIG. 9 shows a case that the adjacent groove tracks Gt are the reverse phase. The adjacent groove tracks Gt have various phase difference depending on the zone of the write-once type optical disk 28.

Then, for example, the monomethine cyanine coloring matter represented by the chemical formula 4 which is used in the present invention can be synthesized as follow.

In a reaction container, 20 ml of acetonitrile was charged, 2 g of a compound represented by the chemical formula 12 and 3.5 g of a compound represented by the chemical formula 13 were added thereto and the mixture was refluxed by heating for 20 minutes to be reacted. After the solvent was distilled off from the reaction mixture, an appropriate amount of ethanol was added, and further, the mixture was refluxed by heating for 30 minutes and cooled to obtain 3.9 g of brilliant dark purple crystals of the monomethine cyanine coloring matter represented by the chemical formula 3. The portion of the crystals was sampled, and when a melting point and a decomposition point were measured by differential scanning calorimetry as heat characteristic, the cyanine coloring matter of the present example showed a decomposition point nearby 245°C which cannot be discriminated from a melting point. When visible absorption spectrum in a methanol solution was measured as extinction characteristic according to a conventional method, the monomethine cyanine coloring matter of the present example showed the main absorption maximum at a purple to blue zone nearby a wavelength of 447 nm ($\varepsilon = 6.94 \times 10^4$). Further, when solubility to organic solvents at 20°C was tested according to a conventional method, the monomethine cyanine coloring matter of the present example exhibited solubility which has no trouble in practical use for amide-base, alcohol-base, ketone-base, nitrile-base and halogen-base organic solvents such as chloroform, N,N-dimethylformamide, methanol, 2,2,3,3-tetrafluoro-1-propanol, ethyl methyl ketone, acetonitrile and chloroform. Further, when $^1$H-nuclear magnetic resonance spectrum of the monomethine cyanine coloring matter of the present example in chloroform-d solution was measured, peaks of chemical shift (ppm, TMS) were observed at positions of 0.51 (t, 6H), 0.83 (m, 4H), 0.97 (m, 4H), 1.64 (s, 12H), 2.93 (s, 6H), 3.38 (s, 6H), 3.62 (t, 4H), 5.40 (s, 1H), 6.82 (d, 2H), 7.26 to 7.49 (m, 8H), 8.00 (d, 2H) and 9.12 (s, 2H).

Although the monomethine cyanine coloring matters used in the present invention are slightly different in

charging condition and their yield depending on their configurations, for example, either of them including those represented by the chemical formulae 5 to 11 other than the above-mentioned compounds, can obtain a desired amount by the above-mentioned method or according to the method.

Chemical formula 12:

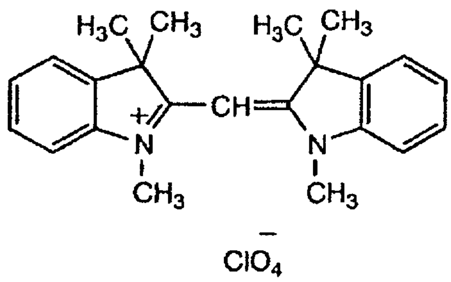

Chemical formula 13:

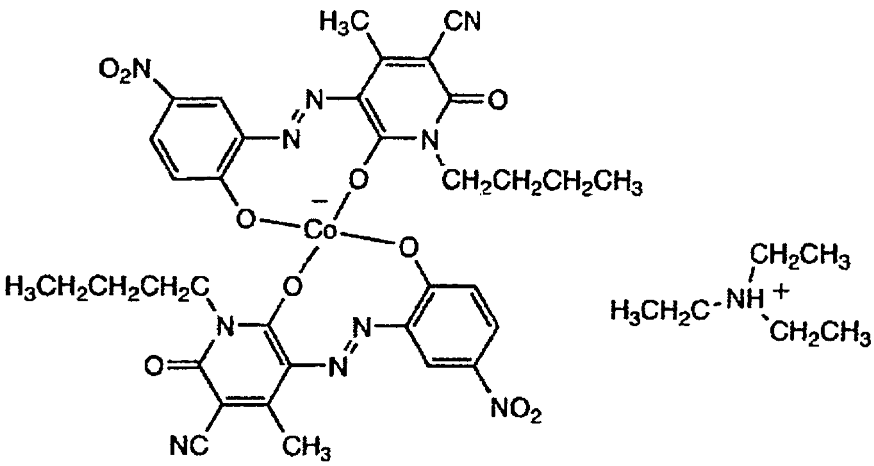

Then, the preparation of the organic coloring matter solution 23 is illustrated. As the organic coloring matter solution 23, a solution having a solution concentration of 1.2% by weight which was prepared by dissolving 1.2 g of the organic coloring matter powder in 100 ml of TFP is used. Dissolution condition to a solvent is that a coloring matter powder is charged in a solvent and subject to ultrasonic for 30 minutes.

The write-once type optical disks 28 are respectively prepared by the methods, using the organic coloring matters represented by the four chemical formulae 1 to 4 which were described above, and evaluation test is enforced by carrying out the record reproduction on those groove tracks Gt. As an evaluation device, an optical disk evaluation device manufactured by Pulsetech Corp. is used.

Test condition is that the aperture NA of objective lens of the optical head 29 is 0.65, the wavelength of laser beam for record reproduction is 405 nm and line speed at record and reproduction is 6.61m/sec. Record signals are random data treated with 8-12 modulation and are a waveform recorded by constant recording power and 2 kinds of bias powers 1 and 2 as shown in FIG. 10.

Further, a track pitch is 400 nm, the groove width Gw to the land width Lw "1" is "1.1", the wobble amplitude of the groove track Gt is 14 nm and the groove depth Gh is 90 nm. Wobble phase modulation is used for recording address information by wobbling.

Hereat, as evaluation properties, 3 kinds of the carrier noise ratio (CNR) of playback signals, SN ratio at partial response (PRSNR)(partial response signal to noise ratio) and simulated bit error rate (SbER) are measured. Further, the definition and measurement method of PRSNR is described in the book commercially available from DVD Format Logo Licensing Co.. It is part of Annex H of DVD Specifications for High Density Read-Only Disc PART 1 Physical

Specifications Version 0.9. PRSNR is preferably 15 or more. The definition and measurement method of SbER is described in the book commercially available from DVD Format Logo Licensing Co.. It is part of Annex H of DVD Specifications for High Density Read-Only Disc PART 1 Physical Specifications Version 0.9. SbER is preferably $5.0 \times 10^{-5}$ or less.

Further, PRSNR and SbER are measured in a condition in which information was also recorded in adjacent tracks.

FIG. 11 shows the measurement results of the respective write-once type optical disks 28 using the organic coloring matters represented by the chemical formulae 1 to 4. Judging from the measurement results shown in FIG. 11, it is grasped that the respective write-once type optical disks 28 using the organic coloring matters represented by the chemical formulae 1 and 3 are not sufficient in the all measurement results of CNR, PRSNR and SbER and not suitable for practical use.

To the contrary, the write-once type optical disks 28 using the organic coloring matters represented by the chemical formulae 2 and 4 obtained good measurement results. The measurement result of the write-once type optical disk 28 using the organic coloring matter represented by the chemical formula 2 is good, but the measurement result of the write-once type optical disk 28 using the organic coloring matter represented by the chemical formula 4 is good in particular.

Then, a test for evaluating the deterioration level by repeating reproduction is carried for the respective write-once type optical disks 28 using the organic coloring matter represented by the chemical formula 4 which has good mesurement result. Namely, reproduction at 10000 times was carried out at laser power for reproduction of 0.8 mW, the deterioration level of PRSNR and SbER was measured and a good measurement result is shown in the last stage of FIG. 11.

As mentioned above, it is grasped that as the organic coloring matter material used for the recording film 24, those having the monomethine cyanine coloring matter at the coloring matter portion and the azo metal complex at the anion portion are good.

As illustrated above, according to the present invention, a recording material for medium which enables the record reproduction of information having performance with a level in high density which reaches adequately at practical use using short wavelength laser beam such as, for example, blue laser beam by preparing a recording film with Low to High property by organic coloring matters is provided.

## Claims

1. A recording material for a medium used for the recording film of a write-once type information recording medium equipped with a transparent resin substrate (20) on which grooves are concentrically or spirally formed and a recording film (24) which was formed on the grooves by one organic coloring matter having an anion portion and a cation portion in which the maximum absorption wavelength zone exists at a longer wavelength side than the wavelength of short wavelength laser beam irradiated on the recording film and forms a record mark on the recording film by irradiation of the short wavelength laser beam, **characterized in that** the cation portion of the organic coloring matter is a monomethine cyanine coloring matter and the anion portion is an azo metal complex and **in that** the record mark has a higher optical reflection coefficient than the optical reflection coefficient of the recording film before irradiation of the short wavelength laser beam, wherein the organic coloring matter is formed by reaction between a first compound whose cation portion is a monomethine cyanine coloring matter and whose anion portion is not an azo metal complex and a second compound whose anion portion is an azo metal complex and whose cation portion is not a monomethine cyanine coloring matter.

2. The recording material for a medium according to claim 1, **characterized in that** the cation portion of the organic coloring matter is shown by the general formula 3:

General formula 3:

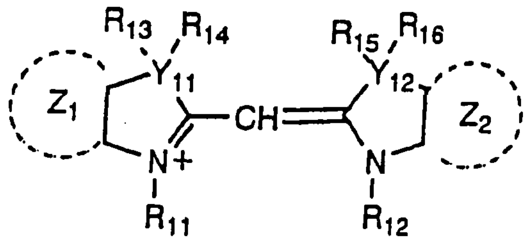

wherein $Z_1$ and $Z_2$ each independently represent the same or different aromatic rings; $Y_{11}$ and $Y_{12}$ each independently represent a carbon atom or a hetero atom; $R_{11}$ and $R_{12}$ represent an aliphatic hydrocarbon group; and $R_{13}$, $R_{14}$, $R_{15}$ and $R_{16}$ each independently represent a hydrogen atom or a substituent and when $Y_{11}$ and $Y_{12}$ are a hetero atom, a part or all of $R_{13}$, $R_{14}$, $R_{15}$ and $R_{16}$ does/do not exist, and
the anion portion is shown by the general formula 4:

General formula 4:

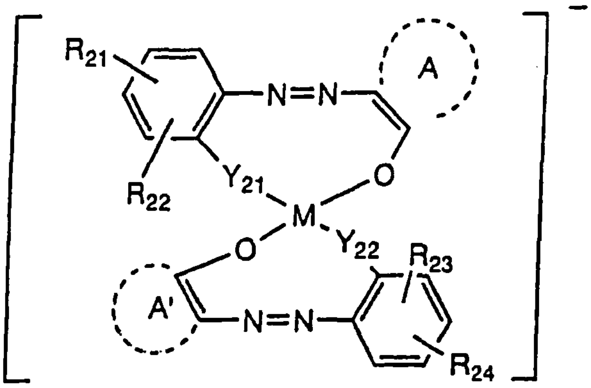

wherein A and A' each independently represent the same or different hetero ring group comprising one or more hetero atoms selected from a nitrogen atom, an oxygen atom, a sulfur atom, a selenium atom and a tellurium atom; $R_{21}$ to $R_{24}$ each independently represent a hydrogen atom or a substituent; and $Y_{21}$ and $Y_{22}$ each independently represent the same or different hetero atoms selected from the elements of the XVI Group in the Periodic Table.

**Patentansprüche**

1. Aufzeichnungsmaterial für ein Medium zur Verwendung als Aufzeichnungsfilm eines Informationsaufzeichnungsmediums des einmal beschreibbaren Typs, das mit einem transparenten Harzsubstrat (20), auf dem Rillen konzentrisch oder spiralförmig ausgebildet sind, und einem Aufzeichnungsfilm (24), der auf den Rillen durch ein organisches Farbmaterial ausgebildet wurde, das einen Anionteil und einen Kationteil aufweist, bei dem der Wellenlängenbereich maximaler Absorption auf der Seite längerer Wellenlängen als die Wellenlänge eines Laserstrahls kurzer Wellenlänge, mit dem der Aufzeichungsfilm bestrahlt wird, liegt und eine Aufzeichnungsmarkierung auf dem Aufzeichnungsfilm durch Bestrahlung mit dem Laserstrahl kurzer Wellenlänge gebildet wird, ausgestattet ist, **dadurch gekennzeichnet, dass** der Kationteil des organischen Farbmaterials ein Monomethincyanin-Farbmaterial ist und der Anionteil ein Azo-Metall-Komplex ist und dass die Aufzeichnungsmarkierung einen höheren optischen Reflexionskoeffizienten als den optischen Reflexionskoeffizienten des Aufzeichnungsfilms vor der Bestrahlung mit dem Laserstrahl kurzer Wellenlänge aufweist, wobei das organische Farbmaterial durch eine Reaktion zwischen

einer ersten Verbindung, deren Kationteil ein Monomethincyanin-Farbmaterial ist und deren Anionteil kein Azo-Metall-Komplex ist, und einer zweiten Verbindung, deren Anionteil ein Azo-Metall-Komplex ist und deren Kationteil kein Monomethincyanin-Farbmaterial ist, gebildet wird.

2. Aufzeichnungsmaterial für ein Medium nach Anspruch 1, **dadurch gekennzeichnet, dass** der Kationteil des organischen Farbmaterials durch die allgemeine Formel 3 angegeben wird:

Allgemeine Formel 3:

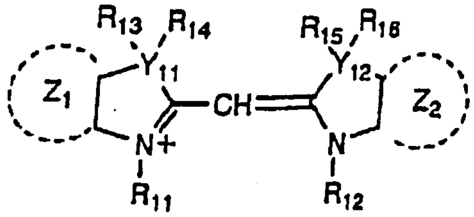

worin $Z_1$ und $Z_2$ jeweils unabhängig voneinander für gleiche oder unterschiedliche aromatische Ringe stehen; $Y_{11}$ und $Y_{12}$ jeweils unabhängig voneinander für ein Kohlenstoffatom oder ein Heteroatom stehen; $R_{11}$ und $R_{12}$ für eine aliphatische Kohlenwasserstoffgruppe stehen; und $R_{13}$, $R_{14}$, $R_{15}$ und $R_{16}$ jeweils unabhängig voneinander für ein Wasserstoffatom oder einen Substituenten stehen und, wenn $Y_{11}$ und $Y_{12}$ für ein Heteroatom stehen, ein Teil der oder alle Reste $R_{13}$, $R_{14}$, $R_{15}$ und $R_{16}$ nicht existieren, und
der Anionteil durch die allgemeine Formel 4 angegeben wird:

Allgemeine Formel 4:

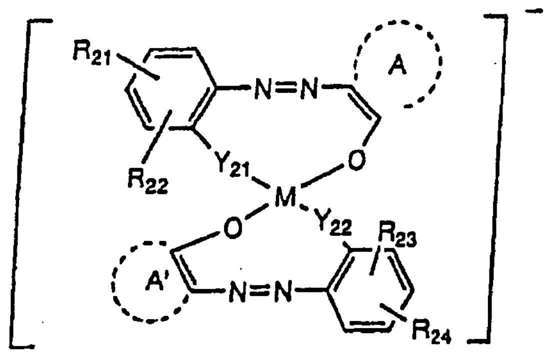

worin A und A' jeweils unabhängig voneinander für gleiche oder unterschiedliche Heteroringgruppen stehen, die ein oder mehrere Heteroatome umfassen, die aus einem Stickstoffatom, einem Sauerstoffatom, einem Schwefelatom, einem Selenatom und einem Telluratom ausgewählt sind; $R_{21}$ bis $R_{24}$ jeweils unabhängig voneinander für ein Wasserstoffatom oder einen Substituenten stehen; und $Y_{21}$ und $Y_{22}$ jeweils unabhängig voneinander für gleiche oder unterschiedliche Heteroatome stehen, die aus den Elementen der Gruppe XVI im Periodensystem ausgewählt sind.

**Revendications**

1. Matériau d'enregistrement pour un support utilisé pour le film d'enregistrement d'un support d'enregistrement d'informations de type non réinscriptible équipé d'un substrat en résine transparente (20) sur lequel des sillons sont formés de manière concentrique ou en spirale et d'un film d'enregistrement (24) qui a été formé sur les sillons par un colorant organique comportant une portion anionique et une portion cationique dans lequel la zone de longueur

d'onde d'absorption maximale existe au niveau d'un côté de longueur d'onde plus longue que la longueur d'onde du faisceau laser de courte longueur d'onde irradié sur le film d'enregistrement et forme une marque d'enregistrement sur le film d'enregistrement par irradiation du faisceau laser de courte longueur d'onde, **caractérisé en ce que** la portion cationique du colorant organique est un colorant monométhine cyanine et la portion anionique est un complexe métallique azoïque et **en ce que** la marque d'enregistrement a un coefficient de réflexion optique supérieur au coefficient de réflexion optique du film d'enregistrement avant irradiation du faisceau laser de courte longueur d'onde, dans lequel le colorant organique est formé par réaction entre un premier composé dont la portion cationique est un colorant monométhine cyanine et dont la portion anionique n'est pas un complexe métallique azoïque et un second composé dont la portion anionique est un complexe métallique azoïque et dont la portion cationique n'est pas un colorant monométhine cyanine.

2. Matériau d'enregistrement pour un support selon la revendication 1, **caractérisé en ce que** la portion cationique du colorant organique est représentée par la formule générale 3 :

Formule générale 3 :

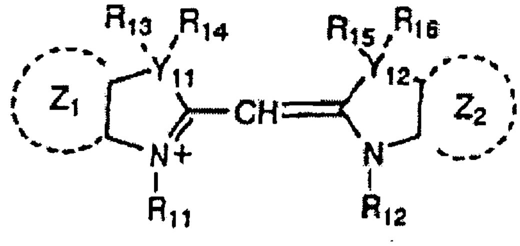

dans laquelle $Z_1$ et $Z_2$ représentent chacun indépendamment des cycles aromatiques identiques ou différents ; $Y_{11}$ et $Y_{12}$ représentent chacun indépendamment un atome de carbone ou un hétéroatome ; $R_{11}$ et $R_{12}$ représentent un groupe hydrocarbure aliphatique ; et $R_{13}$, $R_{14}$, $R_{15}$ et $R_{16}$ représentent chacun indépendamment un atome d'hydrogène ou un substituant et lorsque $Y_{11}$ et $Y_{12}$ sont un hétéroatome, tout ou partie de $R_{13}$, $R_{14}$, $R_{15}$ et $R_{16}$ n'existe pas, et
la portion anionique est représentée par la formule générale 4 :

Formule générale 4 :

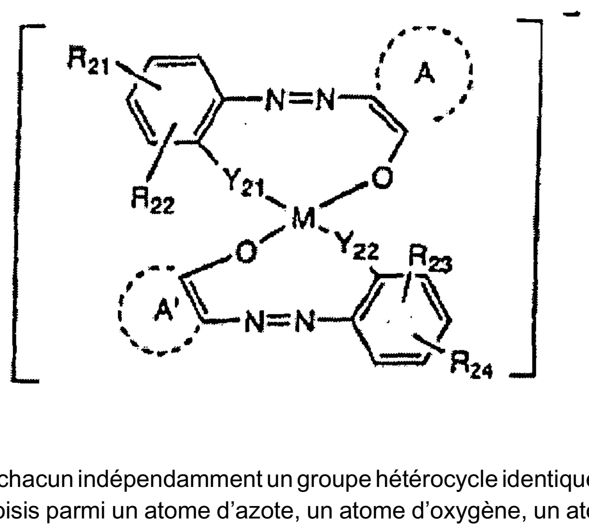

dans laquelle A et A' représentent chacun indépendamment un groupe hétérocycle identique ou différent comprenant un ou plusieurs hétéroatomes choisis parmi un atome d'azote, un atome d'oxygène, un atome de soufre, un atome de sélénium et un atome de tellure ; $R_{21}$ à $R_{24}$ représentent chacun indépendamment un atome d'hydrogène ou un substituant ; et $Y_{21}$ et $Y_{22}$ représentent chacun indépendamment des hétéroatomes identiques ou différents choisis parmi les éléments du groupe XVI dans le tableau périodique.

| Coloring matter | Molecular formula (molecular weight) | λ max (solvent) | Decomposition temperature (calorific value) |
|---|---|---|---|
| Chemical formula 2 (coloring matter A) | $C_{57}H_{59}CoN_{12}O_{10}$ (1131.10) | 577nm $\varepsilon = 1.0 \times 10^5$ (MeOH) | 286℃ (730mJ / mg) |
| Chemical formula 3 (coloring matter B) | $C_{38}H_{32}N_{14}NiO_8$ (871.45) | 611nm $\varepsilon = 8.9 \times 10^4$ (MeOH) | 249℃ (336mJ / mg) |
| Chemical formula 1 (coloring matter C) | $C_{55}H_{61}CoN_{10}O_8$ (1049.08) | 542nm $\varepsilon = 1.6 \times 10^5$ (MeOH) | 259℃ (795mJ / mg) |
| Chemical formula 4 (coloring matter D) | $C_{57}H_{57}CoN_{12}O_{10}$ (1129.07) | 447nm $\varepsilon = 6.9 \times 10^4$ (MeOH) | 269℃ (474mJ / mg) |

FIG. 1

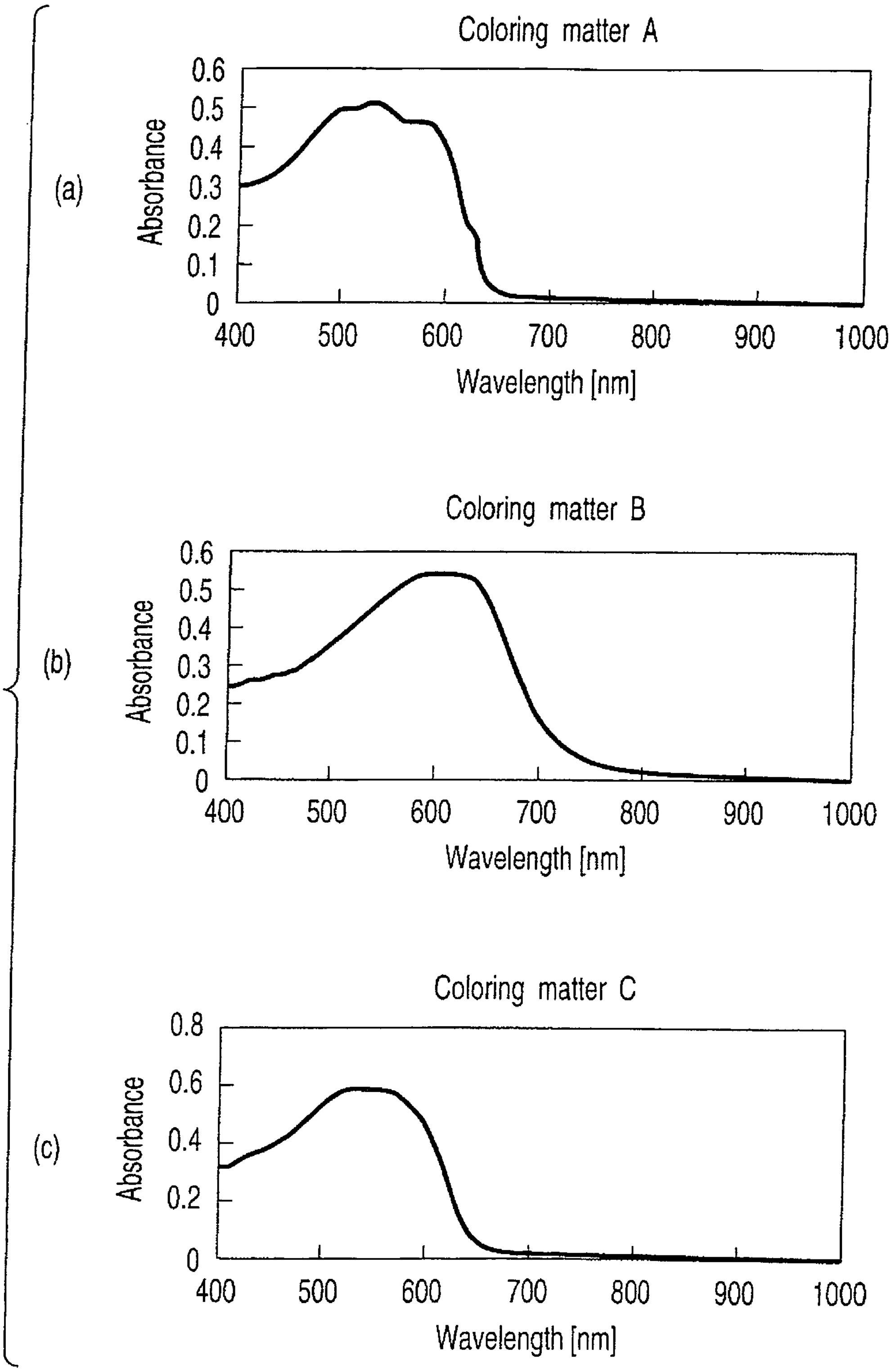
(a)
Coloring matter A
Absorbance
0.6
0.5
0.4
0.3
0.2
0.1
0
400
500
600
700
800
900
1000
Wavelength [nm]
(b)
Coloring matter B
Absorbance
0.6
0.5
0.4
0.3
0.2
0.1
0
400
500
600
700
800
900
1000
Wavelength [nm]
(c)
Coloring matter C
Absorbance
0.8
0.6
0.4
0.2
0
400
500
600
700
800
900
1000
Wavelength [nm]

FIG. 2

FIG. 3

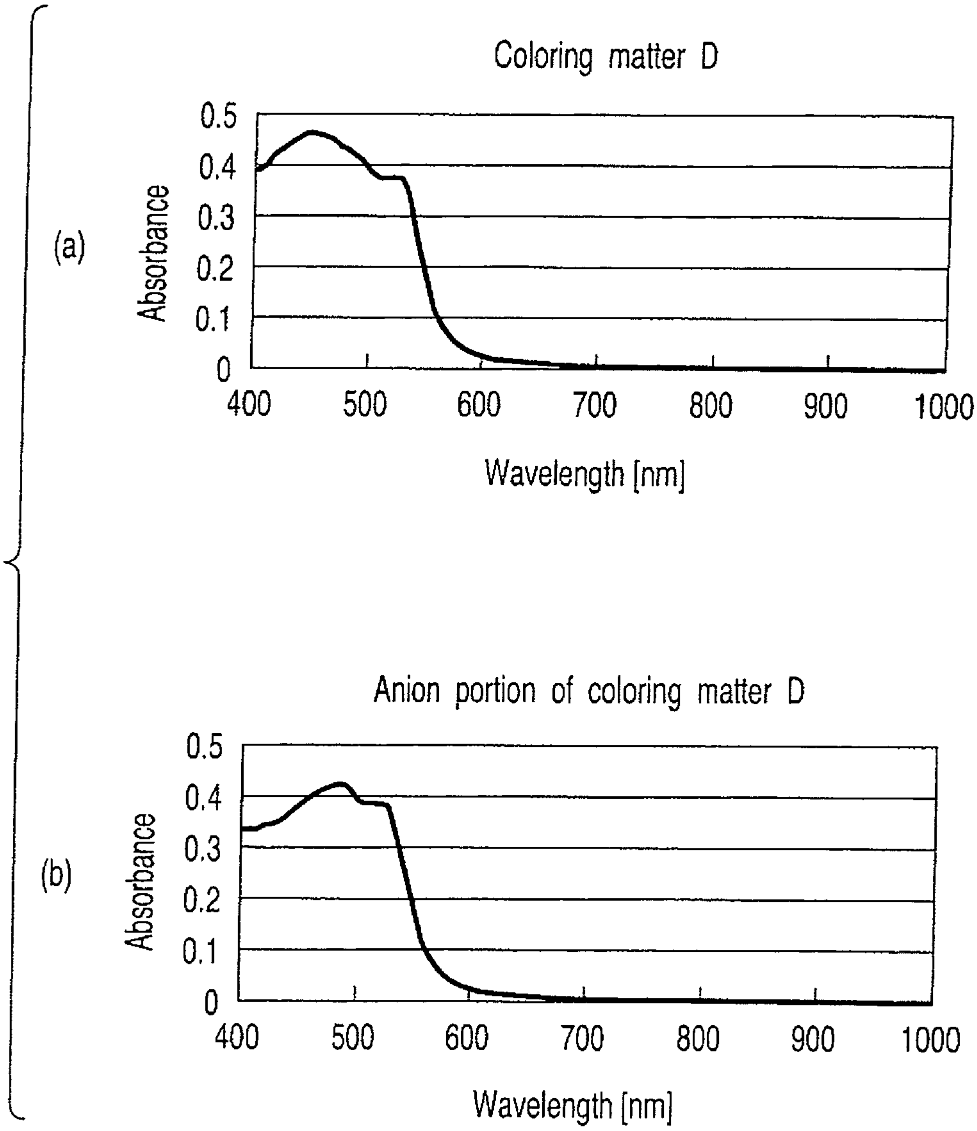
(a)
Coloring matter D
Absorbance
0.5
0.4
0.3
0.2
0.1
0
400
500
600
700
800
900
1000
Wavelength [nm]
(b)
Anion portion of coloring matter D
Absorbance
0.5
0.4
0.3
0.2
0.1
0
400
500
600
700
800
900
1000
Wavelength [nm]

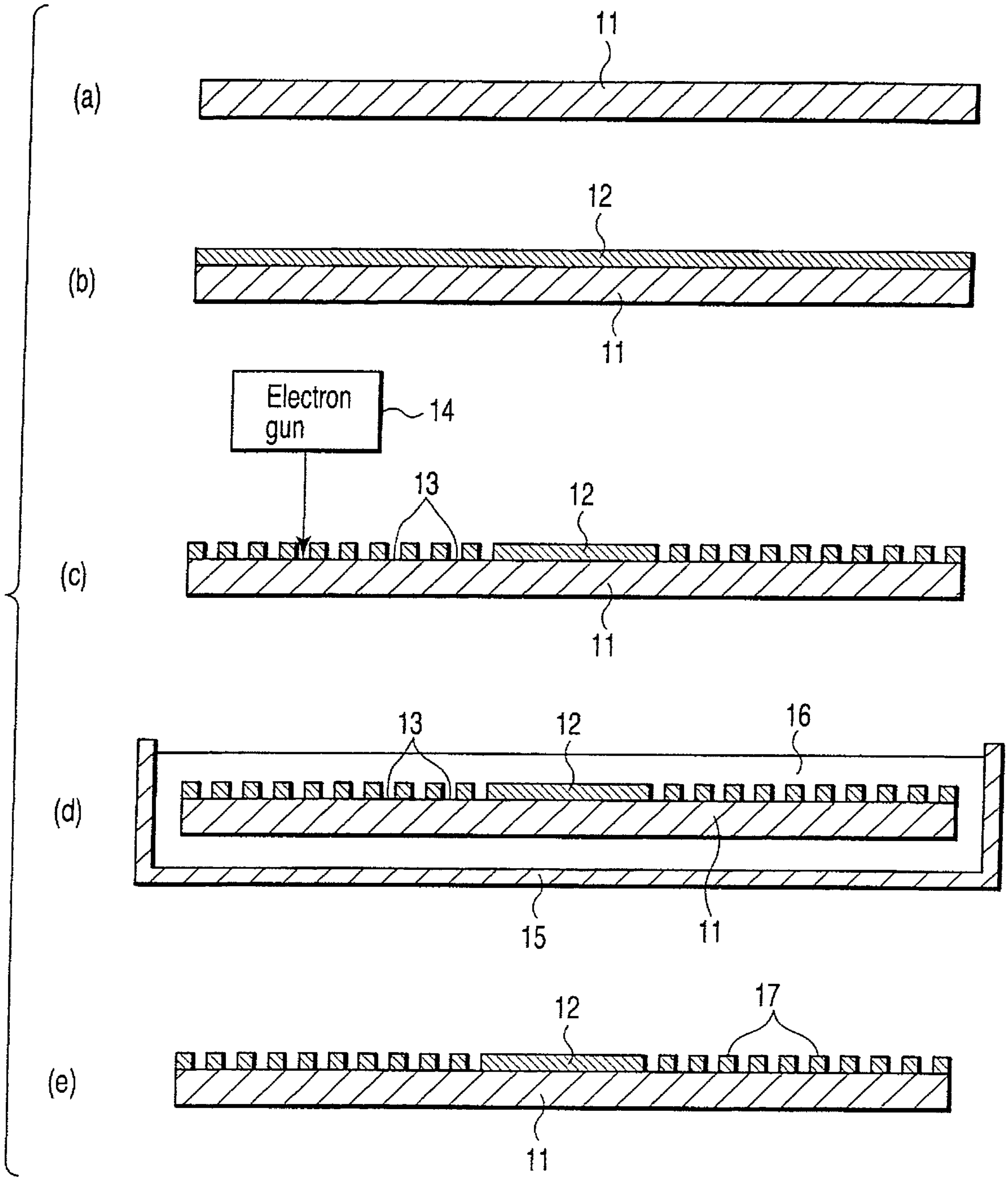


FIG. 4

FIG. 5

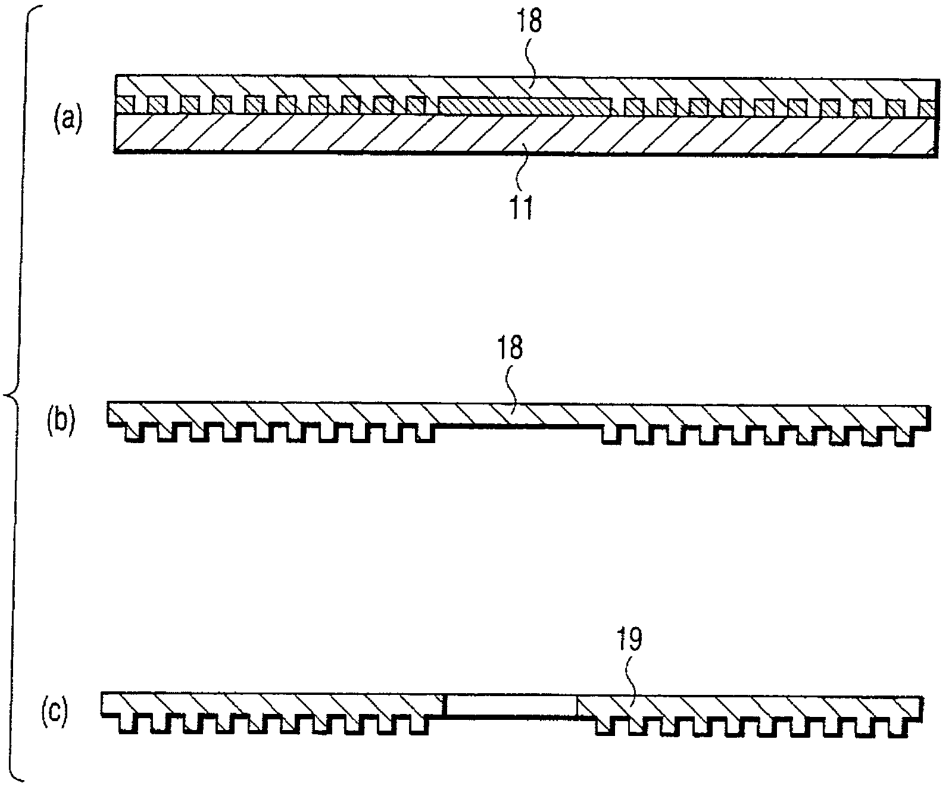

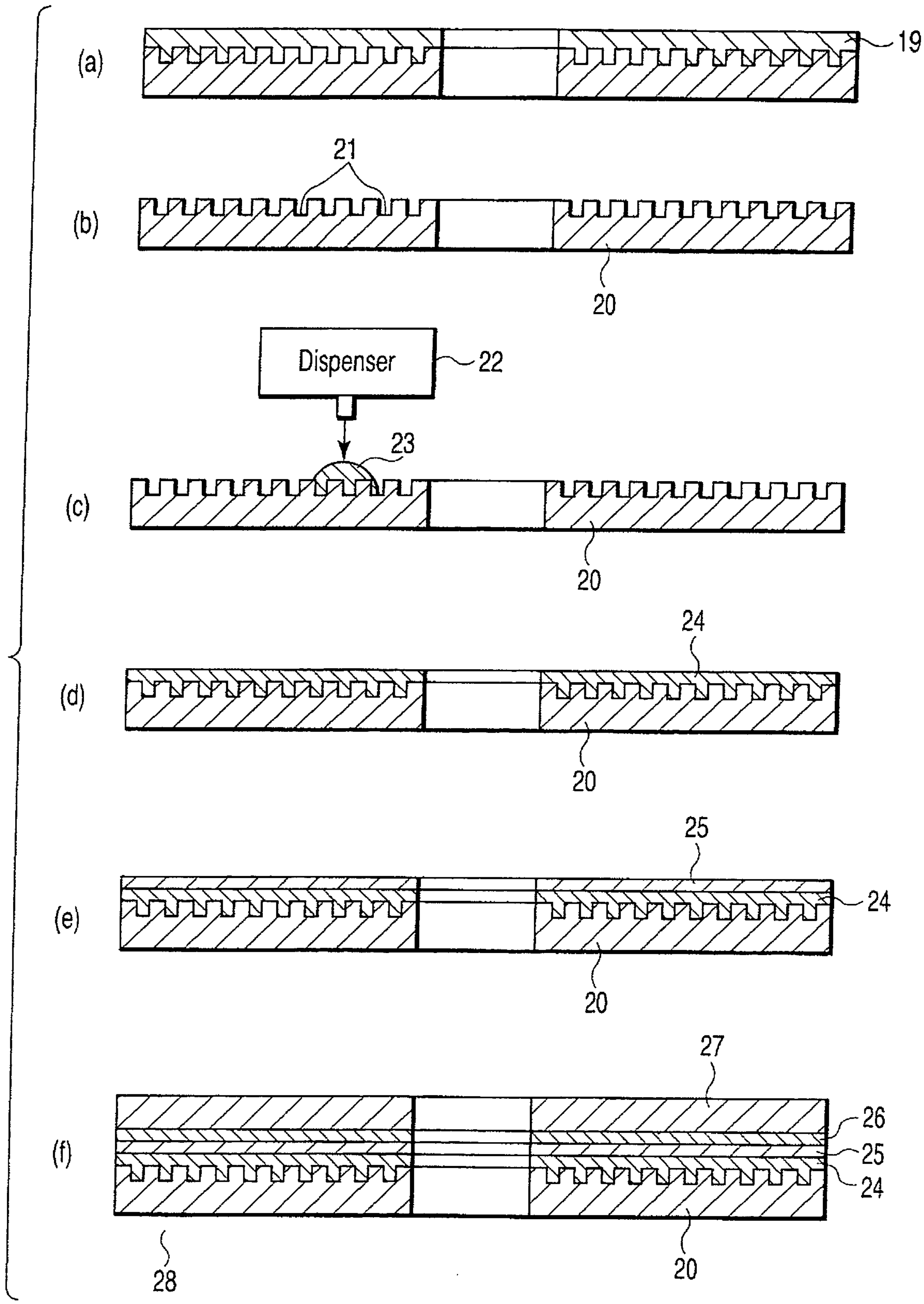


F I G. 6

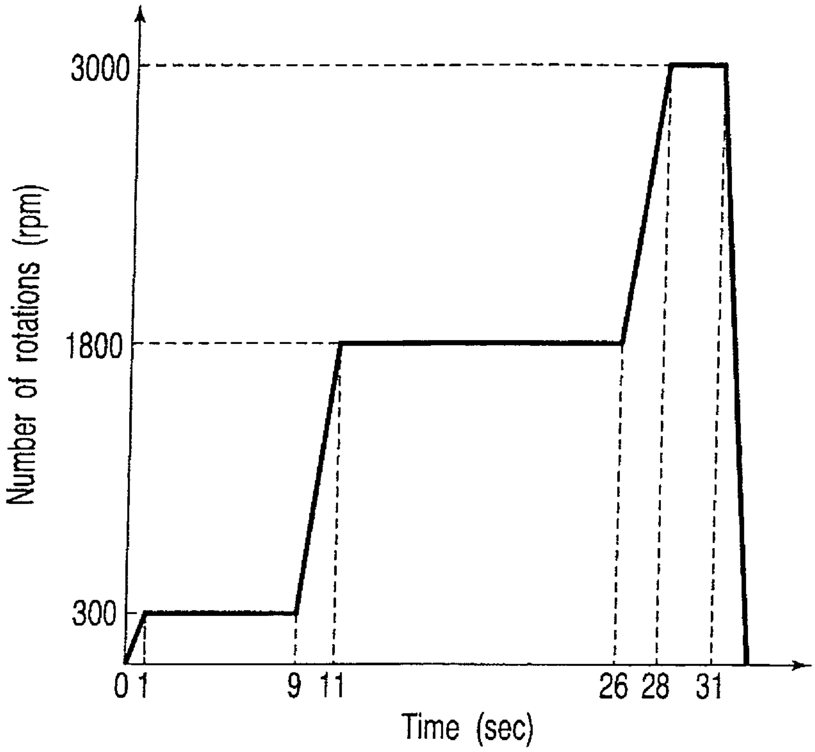
3000
1800
300
Number of rotations (rpm)
0 1
9 11
26 28 31
Time (sec)

F I G. 7

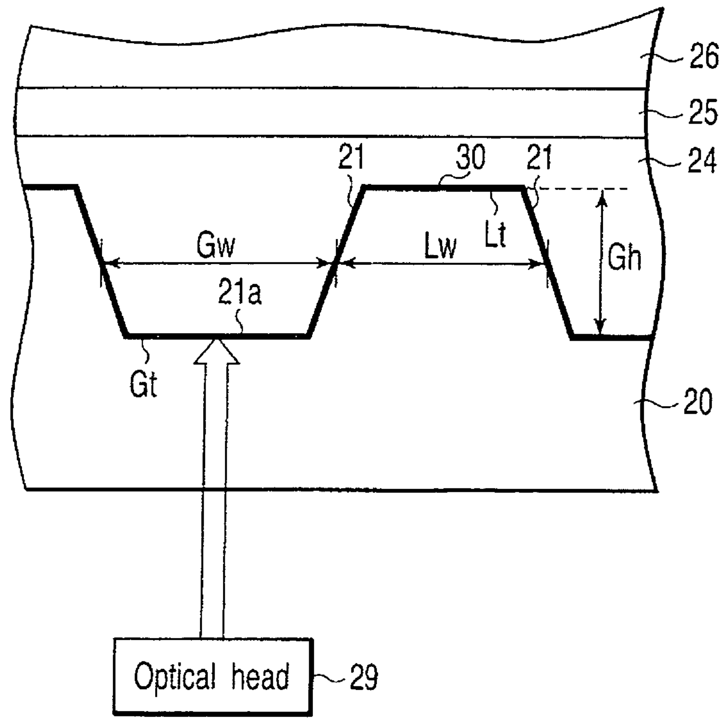
26
25
24
21
30
21
Gw
Lw
Lt
Gh
21a
Gt
20
Optical head
29

F I G. 8

FIG. 9

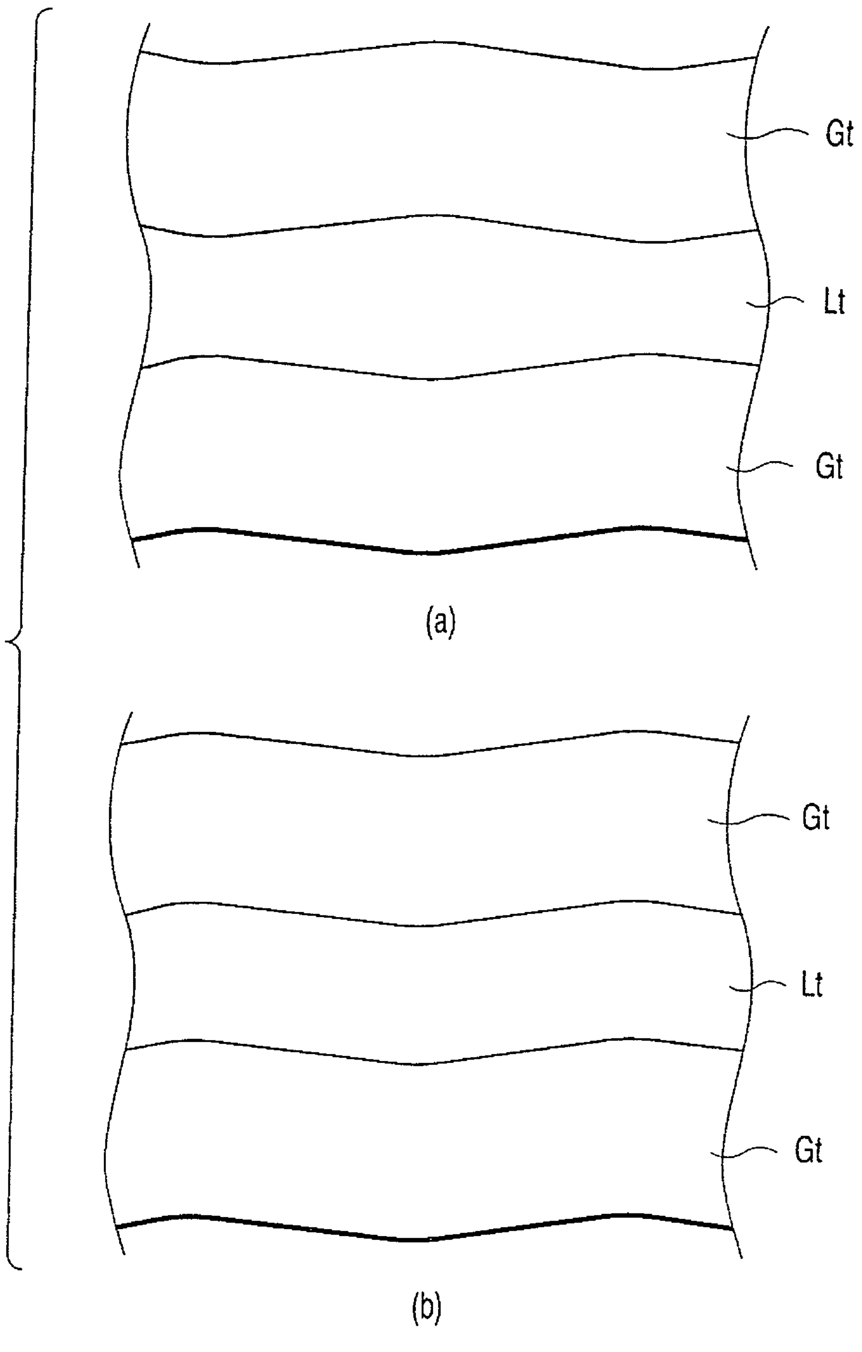

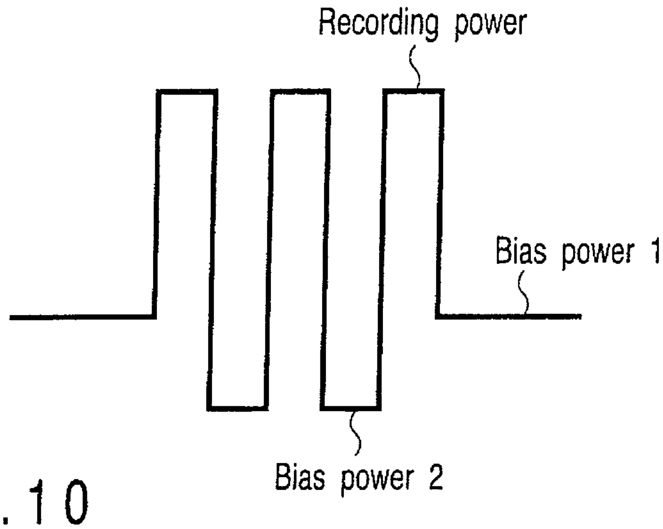


FIG.10

| Coloring matter | CNR | PRSNR | SbER |
|---|---|---|---|
| A | 46.5 | 13.5 | $3.6\times10^{-6}$ |
| B | 42.1 | 5.3 | $5.7\times10^{-3}$ |
| C | 47.9 | 5.3 | $5.7\times10^{-3}$ |
| D | 53.1 | 28.1 | $1.1\times10^{-7}$ |
| D |  | 13.4 | $1.4\times10^{-5}$ |

FIG.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1369861 A
- WO 0140382 A
- WO 00075111 A


### Non-patent literature cited in the description


- Photosensitive Coloring matter. Sangyo Tosho Co, 17 October 1997, 24-30
- Coloring Material Technology Hand Book. Coloring Material Associate. Asakura Shoten Co, 25 November 1989, 1274-1282
- **Masahiro Shinkai et al.** *Coloring matters and Chemicals,* 1992, vol. 37 (7), 185-197